**Europäisches Patentamt**

**European Patent Office**

**Office européen des brevets**

(19)

(11) Veröffentlichungsnummer: **0 033 950 B1**

(12)

# EUROPÄISCHE PATENTSCHRIFT

(45) Veröffentlichungstag der Patentschrift:
20.06.84

(51) Int. Cl.³: **A 01 B 49/02**, A 01 B 49/06

(21) Anmeldenummer: **81100799.6**

(22) Anmeldetag: **05.02.81**

(54) Zapfwellengetriebenes Bodenbearbeitungsgerät.

(30) Priorität: 08.02.80 DE 3004577
29.05.80 DE 3020397
20.11.80 DE 8031009 U

(43) Veröffentlichungstag der Anmeldung:
19.08.81 Patentblatt 81/33

(45) Bekanntmachung des Hinweises auf die Patenterteilung:
20.06.84 Patentblatt 84/25

(84) Benannte Vertragsstaaten:
AT DE FR IT NL

(56) Entgegenhaltungen:
CH - A - 298 426
DE - A - 2 719 713
DE - A - 2 830 892
DE - A - 2 844 260
DE - B - 2 024 752
DE - U - 6 910 520
US - A - 3 991 830

(73) Patentinhaber: **Maschinenfabrik Rau GmbH,
Johannes-Rau-Strasse, D-7315 Weilheim (DE)**

(72) Erfinder: **Rau, Willy, Maschinenfabrik Rau GmbH
Johannes-Rau-Strasse, D-7315 Weilheim (DE)**
Erfinder: **Taus, Christian, Galgenberg 19,
D-7312 Kirchheim (DE)**

(74) Vertreter: **Rotermund, Hanns-Jörg, Dipl.-Phys. et al,
MANITZ, FINSTERWALD & ROTERMUND
Seelbergstrasse 23/25, D-7000 Stuttgart 50 (DE)**

ACTORUM AG

## Beschreibung

Die Erfindung betrifft ein zapfwellengetriebenes Bodenbearbeitungsgerät mit höhenveränderbar — insbesondere mittels Dreipunktaufhängung — an ein das Bodenbearbeitungsgerät tragendes Zugfahrzeug ankoppelbarem Rahmen sowie daran mit in Fahrtrichtung vor einem zapfwellengetriebenen Zinkenrotor austauschbar angeordneten feststehenden Bodenbearbeitungswerkzeugen, einer hinter dem Zinkenrotor angeordneten Abdeckung, welche aufgeworfene Erde zur Bodenoberfläche leitet, sowie einer hinter der Abdeckung höhenverstellbar angeordneten Krümelwalze mit im wesentlichen geschlossener Umfangsfläche und in Umfangsrichtung in Reihe angeordneten Zahnelementen.

Kombinationsgeräte mit mehreren hintereinander angeordneten unterschiedlichen Werkzeugen sind an sich bekannt. Der Vorteil dieser Geräte besteht darin, dass bei einer einzigen Fahrt über das zu bearbeitende Feld mehrere Bearbeitungsabläufe unter erheblicher Einsparung von Zeit gleichzeitig ausgeführt werden können.

Ein Kombinationsgerät mit den eingangs angeführten Merkmalen wird beispielsweise in der DE-A-2 719 713 beschrieben. Hier sind als festehende Bodenbearbeitungswerkzeuge in Draufsicht gänsefussartige Schälmesser angeordnet, welche den Boden horizontal durchtrennen und nach hinten anheben, so dass auf das Bodenbearbeitungsgerät eine starke Belastung wirkt, welche den vorderen Bereich des Gerätes nach unten zur Bodenoberfläche hin zu ziehen sucht. Zur Aufnahme dieser Belastung sind im Bereich der feststehenden Bodenbearbeitungswerkzeuge oberhalb der Schälmesser höhenverstellbare Stützwalzen angeordnet, mit denen sich die Arbeitstiefe der Schälmesser vorgeben lässt. Diese Stützwalzen rollen jedoch auf der noch unbearbeiteten Bodenoberfläche, so dass das Bodenbearbeitungsgerät — jedenfalls in seinem vorderen Bereich — entsprechend der Oberflächenkontur des zu bearbeitenden Bodens relativ starke Vertikalbewegungen ausführt und die Oberfläche des vom Gerät hinterlassenen bearbeiteten Bodens verhältnismässig wellig bleiben kann.

Der Zinkenrotor arbeitet nach der DE-A-2 719 713 in einer der Fahrtrichtung entgegenwirkenden Umlaufsrichtung, so dass an die Leistungsfähigkeit des Antriebes des Zugfahrzeuges besonders hohe Anforderungen gestellt werden. Zwar stehen heute entsprechend leistungsfähige Zugfahrzeuge oftmals zur Verfügung, gleichwohl können jedoch, insbesondere auf feuchten Böden, Schwierigkeiten auftreten, wenn die Antriebsräder des Zugfahrzeuges aufgrund schlechter Traktion durchdrehen.

Der Zinkenrotor ist gegenüber dem Rahmen höhenverstellbar angeordnet, um zwischen den Schälmessern der ohne Verstellmöglichkeit angeordneten feststehenden Bodenbearbeitungswerkzeuge und den Rotorzinken eine gewünschte Höhendifferenz einstellen zu können. Diese Bauweise hat zur Folge, dass zumindest Teile des Getriebes zum Rotorantrieb entsprechend beweglich angeordnet sein müssen. Darüber hinaus ist eine stabile Abstützung des bei seiner Arbeit stark belasteten Zinkenrotors gegenüber dem Geräterahmen nur schwierig zu erreichen. Somit müssen für die relativ zum Geräterahmen verstellbare Anordnung des zapfwellengetriebenen Teiles der Kombination vergleichsweise hohe Herstellungskosten in Kauf genommen werden.

Als Abdeckung sind hinter dem Zinkenrotor vertikale Stäbe in Form eines Rechens bzw. Gitters und hinter denselben ein festes Prallblech angeordnet. Die Stäbe sollen dickere Erdbrocken auffangen und auf den Boden zurücklenken, während stärker zerkrümeltes Erdreich zwischen den Stäben hindurchgeht und erst vom Prallblech nach unten abgelenkt wird. Bei der Arbeit in feuchten und insbesondere in lehmhaltigen Böden besteht jedoch die Gefahr, dass die Zwischenräume zwischen den Stäben verstopfen, ausserdem bildet sich auf dem Prallblech ein starker Erdbelag, der sich nur von Zeit zu Zeit in grossen Stücken und unregelmässig löst, so dass das Arbeitsergebnis beeinträchtigt werden kann.

In den zwischen den Zahnreihen der Krümlerwalze gebildeten Nischen bleibt auf der geschlossenen Umfangsfläche bei Arbeit auf feuchteren Böden relativ leicht Erde hängen, so dass der Lauf der Krümlerwalze stark ungleichförmig werden kann und die Zähne kaum noch wirksam werden. Im übrigen löst sich die Erde von der Krümlerwalze ungleichmässig in grösseren Stücken ab, die besonders störend wirken, da sie auf der fertig bearbeiteten Bodenfläche abgelegt werden.

Im übrigen ist die Krümlerwalze an einer festen Verlängerung des die vorgenannten Geräte bzw. Werkzeuge tragenden Geräterahmens angeordnet, so dass das Gesamtgerät zur Vereinfachung von Wendemanövern oder des Strassentransportes nicht verkürzt werden kann.

Das in der DE-A-2 719 713 beschriebene Bodenbearbeitungsgerät ist somit hinsichtlich seiner Konstruktion sowie seiner Arbeitsleistung verbesserungsbedürftig.

Allerdings sind dem Stand der Technik in dieser Hinsicht nur wenige Hinweise zu entnehmen.

So zeigt die DE-A-2 830 892 lediglich einen Zinkenrotor, welcher der Fahrtrichtung entsprechend umläuft. Dadurch soll ein verbessertes Arbeitsergebnis erreicht werden. Über das Zusammenwirken des Zinkenrotors mit anderen Bodenbearbeitungswerkzeugen wird in dieser Druckschrift jedoch nichts ausgesagt.

In der DE-B-2 024 752 wird eine Gerätekombination mit Zinkenrotor und Krümlerwalze beschrieben. Zwischen Zinkenrotor und Krümlerwalze sind zwei Prallplatten jeweils mit an ihren Unterkanten angeordneten Schürzen angebracht, die vom Zinkenrotor aufgeworfenes Erdreich zur Erdoberfläche leiten. Durch Höhenverstellung und Verschwenkung können die Prallplatten so eingestellt und arretiert werden, dass die dem Zinkenrotor nähere Prallplatte die groberen aufgeworfenen Erdbrocken auf den Boden leitet, während die hintere Prallplatte zur Führung der feiner zerkrümelten Erdteilchen dient. Dadurch kann erreicht werden, dass zwischen den Prallplatten angeordnete Saatauslaufrohre das auszutragende Saatgut bei entsprechender Einstellung dicht oberhalb der gröberen abgelegten Erdbrocken ausbringen und das Saatgut mit feiner zerkrümelten Erdteilchen abgedeckt wird. Bei Arbeit auf feuchten Böden kann sich jedoch an den Prallplatten ein dicker Erdbelag bilden, der sich nur in groben Bruchstücken und unregelmässig ablöst, so dass das Arbeitsergebnis unter Umständen erheblich beeinträchtigt wird.

In der US-A-3 991 830 wird eine Anordnung beschrieben, welche zur Zerkleinerung sehr groben Unrates auf bzw. im Erdboden — etwa nach Rodung von Wäldern — dient. Diese Anordnung besteht aus einer grossen und schweren mit Zähnen besetzten Walze, hinter der ein grosser stabiler Rechen angeordnet ist, dessen Zinken unter einem Anstellwinkel schräg zur Horizontalen derart angeordnet sind, dass sie in den Boden eindringen und den groben Unrat, beispielsweise grosse Äste, Wurzeln und. dgl., hervorholen. Dabei schiebt sich der Unrat über die Zinken, bis er von Anschlagstücken festgehalten wird, die zwischen die Zähne der Walze hineinragen, derart, dass der Unrat durch Zusammenwirken der Anschlagstücke mit den Zähnen in kleinere Stücke zerbrochen wird. Bei der üblichen landwirtschaftlichen Bodenbearbeitung besteht ein Bedarf nach derartigen Geräten nicht.

Aufgabe der Erfindung ist es, ein zapfwellengetriebenes Bodenbearbeitungsgerät mit mehreren hintereinander angeordneten unterschiedlichen Werkzeugen zu schaffen, welches eine einfache und kostengünstige Konstruktion sowie eine leichte und kurze Bauweise aufweist und bei relativ geringen Anforderungen an die Antriebsleistung des Zugfahrzeuges auch bei einmaliger Überfahrt über den zu bearbeitenden Boden ein optimales Arbeitsergebnis liefert, und zwar auch in Feuchtgebieten oder nach Regenfällen, so dass eine weitestgehend wetterunabhängige Bodenbearbeitung möglich ist.

Diese Aufgabe wird dadurch gelöst, dass als feststehende Bodenbearbeitungswerkzeuge beiderseits der vom Zugfahrzeug hinterlassenen Spurrillen höhenverstellbare Nivellierwerkzeuge angeordnet sind, welche mittels im wesentlichen parallel zur Hochachse des Gerätes ausgerichteter, schräg zur Fahrtrichtung stehender und mit ihren hinteren Endstücken in die Spurrillen weisender Nivellierplatten Erde in die Spurrillen zu schieben suchen, dass der mit rahmenfestem Rotorgetriebe am Rahmen angeordnete Zinkenrotor in die Fahrtrichtung unterstützender Umlaufrichtung antreibbar ist, dass die Abdeckung hinter dem Zinkenrotor beweglich und mit gegeneinander beweglichen Teilen angeordnet ist, dass die Krümelwalze an Gelenken am Rahmen mittels eines Hilfsrahmens angeordnet ist und dass zwischen den Zahnelementen der Krümelwalze mit Abstand von denselben Abstreifer angeordnet sind, hinter denen Striegelelemente mit federnden Enden in die Bodenoberfläche eingreifen.

Bei der erfindungsgemässen Anordnung wird das Gerätegewicht im wesentlichen über die Krümelwalze abgestützt, welche auf bereits vorbearbeitetem, eingeebnetem Boden läuft, so dass das erfindungsgemässe Gerät nur relativ geringfügige Vertikalbewegungen ohne nennenswerte Beeinflussung durch unter Umständen stark wellenförmige Konturen des unbearbeiteten Bodens ausführt und die vor der Krümelwalze angeordneten Werkzeuge eine besonders stark einebnende Wirkung haben.

Die Gleichmässigkeit des Arbeitsergebnisses wird durch die Nivellierwerkzeuge auch auf weichen Böden gewährleistet, auf denen die gegebenenfalls stark belasteten Antriebsräder des Zugfahrzeuges unter Seitwärtsverdrängung von Erde tiefe Spurrillen hinterlassen. Das verdrängte Erdreich wird von den Nivellierplatten wieder seitwärts zurückgeschoben. Dadurch wird gleichzeitig gewährleistet, dass der dahinter angeordnete Zinkenrotor gleichmässiger arbeiten kann.

Der zum Vortrieb des Zugfahrzeuges sowie des Bodenbearbeitungsgerätes beitragende angetriebene Zinkenrotor macht ein vorheriges horizontales Abschälen der zu bearbeitenden Bodenschicht vom Untergrund überflüssig, so dass auf gesonderte Abstützwalzen od.dgl. vor dem Zinkenrotor verzichtet werden kann.

Vom Zinkenrotor gegen die Abdeckung geworfenes Erdreich kann an der letzteren nicht haften bleiben, da dieselbe sich unter dem Aufprall der Erdteile dauernd bewegt und darüber hinaus aus gegeneinander beweglichen Teilen besteht, die durch dauernde mehr oder weniger starke Relativbewegungen eine intensive Selbstreinigung der Abdeckung bewirken.

Die Krümelwalze wird durch die Abstreifer ständig saubergehalten, so dass einerseits die Zahnelemente der Walze wirksam arbeiten können und andererseits ein besonders ruhiger Lauf der Krümelwalze erreicht sowie auf dem bearbeiteten Boden hinterlassene, von der Krümelwalze abgefallene grössere Erdbrocken vermieden werden. Der Abstand zwischen den Abstreifern und den Zahnelementen beeinträchtigt die Wirksamkeit der Abstreifer nicht, fürt jedoch zu einer erheblichen Reibungsverminderung, so dass die bei der Arbeit des Gerätes benötigten Zugleistungen besonders gering bleiben.

Die federnden Striegelelemente wirken ähnlich einer Bürste und lockern die oberste dünne Schicht des bearbeiteten Bodens nochmals in erwünschter Weise geringfügig auf, wobei eine die darunterliegenden Bodenschichten vor starker Einwirkung von Luft- und Sonnenwärme und damit Feuchtigkeitsentzug schützende Deckschicht erzeugt wird.

Insgesamt wird somit — auch auf feuchten Böden — ein hervorragendes Arbeitsergebnis erzielt.

Darüber hinaus bringt vor allem die rahmenfeste Anordnung des Zinkenrotors eine erwünschte konstruktive Vereinfachung mit sich, wobei der Rahmen bzw. die Rahmenteile, die den Zinkenrotor tragen, zur Versteifung des Geräterahmens beitragen. Im übrigen wird durch die feste Anordnung des Zinkenrotors dessen Arbeitsleistung verbessert, da der Zinkenrotor bei ungleichförmigem Untergrund an einem Ausweichen in Vertikalrichtung wirksam gehindert wird.

Die Höheneinstellung der Einzelwerkzeuge gegeneinander erfolgt durch Höhenverstellung der ohne gesonderten Antrieb arbeitenden Werkzeuge, d.h. die Höhenverstellung dieser Werkzeuge — Nivellierwerkzeuge, Krümelwalze und Striegelelemente — kann mit einfachen konstruktiven Mitteln erreicht werden.

Die Anordnung der Krümelwalze an einem Hilfsrahmen ermöglicht weitestgehend die Verwendung von Rahmenteilen, wie sie bei üblichen Krümlergeräten verwendet werden, welche lediglich Walzen ohne Kombination mit anderen Werkzeugen umfassen. Aufgrund der gelenkigen Anordnung kann der Hilfsrahmen gegebenenfalls bei Wendemanövern oder zur Erleichterung des Strassentransportes zusammen mit der Krümelwalze hochgeklappt werden, um die Gesamtlänge des Gerätes zu verkürzen. Gleichzeitig ist eine einfache und schnell einstellbare Abstützung des Hilfsrahmens durch eine Spindel oder dgl. möglich.

Die nur fakultativ auf den Anspruch 1 zurückbezogenen Ansprüche 2, 10, 19, 24, 27, 36 und 39, für deren Gegenstände somit auch selbständiger Schutz beansprucht wird, betreffen vorteilhafte Ausbildungen von Elementen des Bodenbearbeitungsgerätes nach Anspruch 1. Die übrigen Ansprüche beziehen sich auf vorteilhafte Ausführungsformen des Bodenbearbeitungsgerätes bzw. seiner Elemente.

Die vorgesehenen Nivellierwerkzeuge erfordern nur wenig Baulänge und sind geeignet, auch bei schweren oder sehr feuchten Böden die vom Fahrzeug hinterlassenen Spurrillen einzuebnen. Dazu sind die Nivellierwerkzeuge zweckmässigerweise beidseitig der Spurrillen angeordnet. Aufgrund der T-förmigen Ausbildung der im wesentlichen aus mittig an Stielen angeordneten Nivellierplatten bestehenden Nivellierwerkzeugen wirken auf den Stiel nur geringe Drehmomente bezüglich der Stielachse, so dass insgesamt eine steife Halterung für die Nivellierplatten gegeben ist. Als Stiele können plattenförmige Stücke angeordnet sein, welche in einfacher Weise flächig mit den Nivellierplatten verbunden sind. Gegebenenfalls können Stiel und Nivellierplatte auch aus einer gemeinsamen Platte bestehen, die beispielsweise aus einem grossen starken Blech ausgeschnitten ist.

Bei Befestigung der Nivellierwerkzeuge mittels Schellen an einem Querbalken können der seitliche Abstand der Nivellierwerkzeuge und auch die Anzahl der Werkzeuge verändert werden. Wenn Schellen und Querbalken ein mehreckiges, vorzugsweise etwa quadratisches Profil aufweisen, wird auch bei relativ locker gespannten Schellen eine drehfeste Verbindung zwischen Querbalken und Nivellierwerkzeugen gewährleistet.

Durch Höhenverstellbarkeit der Nivellierwerkzeuge lässt sich deren Schälwirkung auf die oberen Erdschichten einstellen.

Vorzugsweise sind die Nivellierplatten gegenüber der Horizontalebene etwas nach rückwärts geneigt, so dass sie über sehr feste Hindernisse, wie Felsbrocken od.dgl., unter Anhebung des Bodenbearbeitungsgerätes hinweggleiten können.

Die Rotorzinken mit in Drehrichtung weisender Schlagkante mit keilförmigem Querschnitt zerteilen beim Eingreifen in den Boden das Erdreich, welches dabei in Form einer Keilwelle zu beiden Seiten der jeweiligen Zinke weggeschleudert und abgelegt wird. Durch die einander entgegengerichteten Verschiebungen bzw. Verwerfungen des Bodens durch in axialer Richtung der Rotorwelle benachbarte Zinken werden die Bodenbrocken wirksam zerkleinert und erhalten eine besonders gleichmässig gelockerte Struktur.

Zur Bildung der Schlagkante können die Zinken in einfacher Weise einen rautenförmigen oder vorzugsweise quadratischen Querschnitt besitzen, d.h. die Zinken bestehen aus einem Vierkantprofil genügender Stärke, wobei eine Diagonale des Profils etwa parallel zur Umlaufrichtung ausgerichtet ist, so dass eine der Kanten des Vierkantprofils die Schlagkante bildet.

Um den vom Erdreich den Zinken entgegengesetzten Widerstand zu vermindern, können die Zinken sträg unter einem spitzen Winkel zur Schlagkante und etwa parallel zur Rotorwelle verlaufende äussere Stirnflächen besitzen. Dadurch werden am Ende der Schlagkante scharfe Spitzen gebildet, die das Eindringen der Zinken in das Erdreich erleichtern.

Vorzugsweise sind die Zinken mit einem radialen Abstand von der Wellenachse so angeordnet, dass die Wellenachse in Umlaufrichtung der Zinken gesehen, vor der Schlagkante verläuft.

Aufgrund dieser Anordnung wird von der Schlagkante und einem von der Wellenmitte zum äusseren Schlagkantenende verlaufenden Radialstrahl ein spitzer Winkel eingeschlossen, so dass die Zinke beim Umlauf des Rotors auf das Erdreich auch eine Kraft in Richtung auf die Rotorwelle ausübt. Dadurch wird die erwünschte Auflockerung des bearbeiteten Bodens weiter begünstigt.

Die in den Ansprüchen gekennzeichneten, in Axialrichtung und Umfangsrichtung der Rotorwelle versetzten Anordnungen der Zinken, ermöglichen einen ruhigen Lauf des Zinkenrotors sowie eine gute Zugänglichkeit der Zinken beim Austausch derselben.

Die Austauschbarkeit wird durch eine Anordnung der Zinken in etwa tangential zur Rotorwelle angeordneten Muffen begünstigt.

Zur weiteren Zerkleinerung der vom Zinkenrotor aufgeworfenen Erdschollenstücke kann hinter dem Rotor als Prallfläche ein Rechen mit klingenartigen Rechenzinken angeordnet sein, die schwenkbar, dem Widerstand des Bodens nachgebend, aufgehängt und mittels einer die Rückseite der Rechenzinken zumindest teilweise abdeckenden Matte belastet sind. Unter dem Aufprall der hochgeschleuderten Erdschollenstücke sowie durch den Widerstand der Bodenoberseite werden die Rechenzinken entsprechend dem jeweiligen örtlichen Widerstand unterschiedlich weit entgegen der Belastung durch die Matte ausgelenkt, so dass eventuell zwischen einzelnen Rechenzinken verklemmte Erdstücke durch die Relativbewegung der Rechenzinken zueinander gelöst und auf die Erdoberfläche abgeworfen werden. Der Zinkenrechen ist also selbstreinigend.

Die Schneidewirkung der Rechenzinken kann durch sägezahnförmige Vorderkanten erhöht werden. Zusätzlich bzw. alternativ können die Rechenzinken, in Draufsicht gesehen, zickzackförmig zueinander versetzt angeordnet sein, so dass auf die Rechenzinken aufprallende Erdbrocken besonders gut längs der Rechenzinken geführt und zerschnitten werden.

Der Schwenkbereich der Rechenzinken in Fahrtrichtung kann durch verstellbare Anschläge begrenzt sein, die gegebenenfalls automatisch bei einer Höhenverstellung der nachfolgenden Krümelwalze verstellt werden.

Der Zinkenrechen ist besonders für trockene Böden vorteilhaft. Bei feuchten Böden genügt es dagegen, wenn hinter dem Zinkenrotor eine halbstarre Prallfläche angeordnet ist, die den auftreffenden Erdstücken örtlich nachgeben kann. Aufgrund dieser Flexibilität wird das an der Prallfläche anhaftende Erdreich in kleine Stücke zerrissen und auf die Bodenoberfläche abgeworfen.

Hinter der den Rechenzinken belastenden Matte bzw. hinter der halbstarren Prallfläche können Saatausläufe einer Drillvorrichtung angeordnet werden. Dazu dient vorzugsweise eine horizontal bewegliche flexible Leiste, welche ein Zurückweichen einzelner Saatauslauf-Mündungsstücke in Längsrichtung des Bodenbearbeitungsgerätes zulässt, jedoch den Seitenabstand zwischen den Saatauslauf-Mündungsstücken im wesentlichen konstant hält, so dass das Saatgut in gut parallelen Strichen in den Boden eingebracht wird.

Mittels einer Federung kann die Haltevorrichtung der Saatauslauf-Mündungsstücke entgegen dem Bodenwiderstand in Fahrtrichtung beaufschlagt sein, so dass die Mündungsstücke verstärkt in die Bodenoberfläche eingedrückt werden.

Die Krümelwalze, welche auf einem umfangsseitig im wesentlichen geschlossenen Walzenkörper in Umfangsrichtung ausgerichtete Zahnreihen besitzt, zwischen deren Zähnen in Umfangsrichtung Lücken verbleiben, wird durch Abstreifer sauber gehalten, die mit Abstand von den Zahnreihen angeordnet sind. Die Abstreifer arbeiten somit jeweils nur auf einem Streifen zwischen den Zahnreihen, der schmaler als der Zahnreihenabstand in Axialrichtung der Krümelwalze ist. Es hat sich herausgestellt, dass der zwischen den Zahnreihen und den Abstreifern verbleibende Bereich wirksam dadurch gereinigt wird, dass vom Abstreifer auf der Walzenoberfläche erfasstes Erdmaterial auch teilweise seitwärts gegen die Zahnreihen hin verschoben wird. Diese Seitwärtsverschiebung, die von den Öffnungen zwischen den Zahnelementen begünstigt wird, führt dazu, dass auch das von den Abstreifern nicht direkt erfasste, an der Walzenoberfläche anhaftende Erdmaterial von derselben gelockert und abgeworfen wird.

Soweit das von den Abstreifern direkt erfasste Erdmaterial, wie z.B. bei lehmhaltigen Böden, feucht und klebrig ist, wird es von den Abstreifern in relativ grossen Platten von der Walzenoberfläche abgeschält und schuppenförmig auf die Bodenoberfläche abgeworfen. Zur Zerkleinerung dieser Schuppenstücke dienen die Striegelelemente, die erfindungsgemäss hinter den Abstreifern in die Bodenoberfläche eingreifen.

Die von der Krümelwalze hinterlassene Erdoberfläche weist ein besonders gleichförmiges Bild mit homogener und geringer Krümelgrösse auf. Insbesondere ist hervorzuheben, dass auch bei festeren Böden weder von den Striegelelementen noch von den Zahnreihen hinterlassene Striche erkennbar sind.

Die für die Krümelwalze notwendigen Zugkräfte sind vergleichsweise gering, da die Zahnreihen gegenüber bisherigen Walzen mindestens den doppelten Abstand (in Achsrichtung der Walze gesehen) aufweisen können und die Abstreifer die Zahnreihen nicht direkt berühren, so dass einerseits die Reibungswiderstände, die bei bisherigen Walzen durch die Reibung der Abstreifer an den Zahnreihen hervorgerufen werden, entfallen und andererseits der Rollwiderstand der Walze aufgrund der verminderten Anzahl der Zahnelemente drastisch verringert wird.

Die Abstreifer liegen vorzugsweise, in Achsrichtung der Walze gesehen, unterhalb der horizontalen Mittelebene an der Walzenoberfläche an, so dass auch bei geringer Neigung der Abstreifer gegenüber der Horizontalebene ein spitzer Anstellwinkel zwischen Walzenoberfläche und Abstreifern erzielt wird und dementsprechend eine gute Schälwirkung der Abstreifer bei geringem Widerstand gewährleistet ist. Im übrigen hat sich überraschenderweise als vorteilhaft herausgestellt, wenn das von den Abstreifern abgeschälte Erdreich aus geringer Höhe auf die Erdoberfläche abgeworfen wird, so dass die abgeschälten Erdschuppen noch einen relativ festen Zusammenhalt haben und erst von den Striegelelementen feinkrümelig zerrissen werden.

Durch federnde Anordnung der Striegelelemente wird eine dauernde Flatterbewegung der in den Boden eingreifenden Enden der Striegelelemente erreicht. Dies führt zu einer besonders gleichmässigen Zerkrümelung des Erdreiches.

Bei sehr sandigen Böden kann auf den Einsatz der Striegelelemente im allgemeinen verzichtet werden. Deshalb ist es vorteilhaft, wenn die Striegelelemente austauschbar, beispielsweise an den Abstreifern befestigt sind, wobei die zur mittelbaren bzw. unmittelbaren Befestigung der Abstreifer am Walzenrahmen dienenden Befestigungsmittel, wie insbesondere Schrauben und Muttern, zugleich zur Befestigung der Striegelelemente dienen.

In Verbindung mit den mit Abstand von den Zahnelementen angeordneten Abstreifern ist besonders vorteilhaft, wenn die in Umlaufrichtung der Walze mit Abstand voneinander angeordneten Zahnelemente als etwa trapezförmige Platten angeordnet sind, die an ihrer langen Basiskante auf der Walzenoberfläche befestigt sind. Aufgrund der Trapezform lassen sich die Platten ohne Verschnitt aus entsprechenden Blechstreifen stanzen, so dass der entsprechende Herstellungs- und Materialaufwand ausserordentlich gering ist. Die trapezförmigen Platten können an ihrer langen Basisseite mit der Walzenoberfläche verschweisst sein, wobei, in Achsrichtung der Walze gesehen, die Schweissnaht an der einen Hälfte der Basiskante auf der Vorderseite und an der anderen Hälfte der Basiskante auf der Rückseite der Platten angeordnet ist. Vorzugsweise ist dabei die Schweissnaht jeweils an der Vorder- und Hinterkante der Platten, in Umlaufrichtung gesehen. auf der Walzenoberfläche um die trapezförmigen Platten etwas herumgezogen. Die Anordnung der Schweissnaht zur einen Hälfte auf der einen und zur anderen Hälfte auf der anderen Seite der Platten bewirkt eine Verspannung derselben und trägt zu deren Versteifung in günstiger Weise bei. Der aufgrund der Wölbung der Walzenoberfläche zwischen derselben und der geradlinigen Basiskante der trapezförmigen Platten beidseitig einer mittleren Radialebene verbleibende keilförmige Spaltform wird beim Schweissen mit Metall ausgefüllt. Eine Anpassung der Basiskanten der Platten an die Walzenrundung ist überflüssig.

Für die Nivellierwerkzeuge, den Zinkenrotor, den Zinkenrechen, die halbstarre Prallfläche hinter dem Zinkenrotor, die Anordnung der Saatausläufe und die Ausbildung der Krümelwalzen sowie die Anordnung der Striegelelemente wird Elementenschutz beansprucht.

Nachfolgend werden bevorzugte Ausführungsbeispiele der Erfindung sowie weitere vorteilhafte Merkmale anhand der Figuren erläutert. Dabei zeigt

Fig. 1 eine teilweise aufgeschnittene Seitenansicht eines erfindungsgemässen Bodenbearbeitungsgerätes mit Drillvorrichtung,

Fig. 2 eine Draufsicht auf das Gerät ohne Drillvorrichtung und ohne Krümelwalze,

Fig. 3 eine Achsansicht einer ersten Ausführungsform eines Zinkenrotors für das erfindungsgemässe Bodenbearbeitungsgerät,

Fig. 4 eine Teilansicht auf ein Zinkenrotorteil entsprechend dem Pfeil IV in Fig. 3,

Fig. 5 eine der Fig. 3 entsprechende Achsansicht einer zweiten bevorzugten Ausführungsform,

Fig. 6 eine dem Pfeil VI in Fig. 5 entsprechende Teilansicht dieser Ausführungsform,

Fig. 7 die Lage der Bodenberührungsstellen des Zinkenrotors gemäss den Fig. 5 und 6 beim Betrieb des erfindungsgemässen Bodenbearbeitungsgerätes,

Fig. 8 eine Achsansicht einer weiteren Ausführungsform des Zinkenrotors,

Fig. 9 eine Draufsicht auf ein Zinkenrotorteil entsprechend dem Pfeil IX in Fig. 8,

Fig. 10 eine der Fig. 7 entsprechende Darstellung für den Rotor gemäss den Fig. 8 und 9,

Fig. 11 eine ausschnittsweise Seitenansicht des erfindungsgemässen Bodenbearbeitungsgerätes mit Rotor und Zinkenrechen,

Fig. 12 eine ausschnittsweise, teilweise aufgerissene Draufsicht auf das in Fig. 11 dargestellte Gerät,

Fig. 13 eine teilweise aufgerissene ausschnittsweise Seitenansicht eines Zinkenrotors mit dahinter angeordneter halbelastischer Prallfläche,

Fig. 14 eine Draufsicht auf die Prallfläche entsprechend dem Pfeil XIV in Fig. 13,

Fig. 15 eine Achsansicht der Krümelwalze,

Fig. 16 eine ausschnittsweise Draufsicht auf die Krümelwalze entsprechend dem Pfeil XVI in Fig. 15,

Fig. 17 eine Draufsicht auf den Abstreifer entsprechend dem Pfeil XVII in Fig. 15,

Fig. 18 eine Einzelheit am Hilfsrahmen der Krümelwalze und

Fig. 19 den gleichen Hilfsrahmen wie in Fig. 18, jedoch in einer anderen Höheneinstellung.

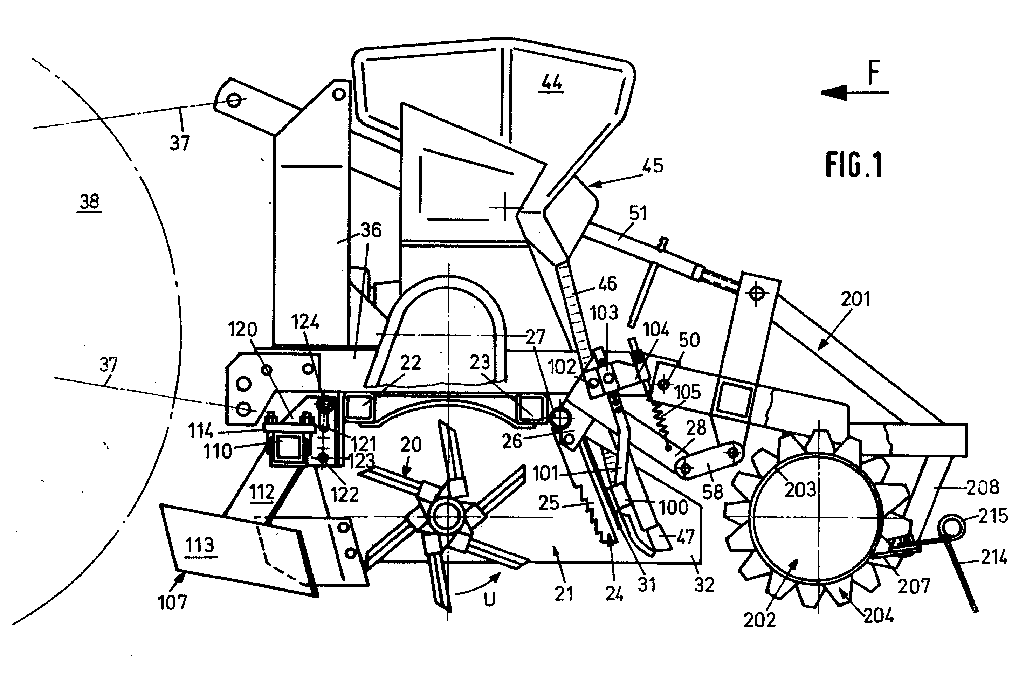

Das in Fig. 1 dargestellte besonders bevorzugte Bodenbearbeitungsgerät besitzt einen Rahmen 36, welcher mittels einer an sich bekannten Dreipunktaufhängung 37 an ein nur schematisch dargestelltes Zugfahrzeug 38 gekoppelt ist.

Dieser Rahmen 36 trägt einen Zinkenrotor 20, an dessen Gehäuse 21 dem Rotor 20 in Fahrtrichtung F vorauslaufende Nivellierwerkzeuge 107 angeordnet sind.

An Gelenken 50 ist am Rahmen 36 mittels eines Hilfsrahmens 201 eine Krümelwalze 202 angeordnet. Der Hilfsrahmen 201 ist über eine Spindel 51, gegebenenfalls federnd (Federn nicht dargestellt), gegen den Rahmen 36 abgestützt.

Das Gehäuse 21 des Zinkenrotors 20 ist mit Ausnahme zur Bodenseite und nach vorn und hinten weitgehend geschlossen und besitzt einen Rahmen mit Querholmen 22 und 23. Nach hinten schliesst ein Rechen 24 das Gehäuse 21 ab.

Die Rechenzinken 25, die jeweils eine sägezahnförmige Vorderkante aufweisen können, sind an Laschen 26 schwenkbar gehalten, die parallel zueinander nebeneinander an einem Stab 27 schwenkbar angeordnet sind. Die Laschen 26 sind an einen Ausleger 28 gekoppelt, welcher über eine Stange 58 am Rahmen 201 der Krümelwalze 202 gelenkig befestigt ist. Bei Höhenverstellung des Rahmens 201 der Krümelwalze 202 mittels der Spindel 51 wird der Ausleger 28 unter Mitnahme der Laschen 26 geschwenkt, die dabei mit den an ihnen aufgehängten Rechenzinken 25 entsprechend verstellt werden, so dass gleichzeitig die mögliche vorderste Stellung der Rechenzinken 25 geändert wird. Deren Schwenkbereich nach vorne in Fahrtrichtung F wird nämlich durch ihre obersten Enden begrenzt, welche bei Schwenkung der Zinken in Fahrtrichtung gegen den Stab 27 anschlagen. Vorzugsweise entspricht die jeweilige Anhebung der möglichen untersten Stellung der Rechenzinken 25 dem halben Hub der Krümelwalze 202.

Am Stab 27 ist ausserdem eine Matte 31, beispielsweise eine armierte Gummimatte, befestigt, die auf der Rückseite der Zinken 25 aufliegt und diese aufgrund ihrer Belastung in die Fahrtrichtung zu schwenken sucht. Seitlich grenzt die Matte 31 an verlängerte Seitenbleche 32 des Gehäuses 21, so dass auch bei aufgebogener Matte 31, beispielsweise wenn die Zinken 25 unter dem Widerstand des Erdreiches die Matte 31 zurückdrängen, ein dichter Abschluss an den seitlichen Mattenrändern gewährleistet ist.

Der Rotor 20, welcher zweckmässigerweise in einer die Fahrtrichtung F des Gerätes unterstützenden Umlaufrichtung U angetrieben wird, reisst beim Betrieb den Boden auf und wirft dabei einen Teil der erzeugten Schollenstücke gegen den Rechen 24, so dass die Schollenstücke zertrümmert oder von den klinkenartigen Rechenzinken 25 zerschnitten werden. Die entstehenden Krümel werden von der Matte 31 nach unten abgelenkt und oberflächlich glattgestrichen.

Auf den Querholmen 22 und 23 des Rotorgehäuses 21 ist ein Saatgutbehälter 44 einer Drillvorrichtung 45 angeordnet, welche dosierte Saatgutmengen über zumindest teilweise in ihrem unteren Bereich flexible Rohrleitungen 46 an Saatgutauslauf-Mündungsstücke 47 zuführt.

Diese Mündungsstücke 47 sind an einem Halteträger 100 angeordnet, der an Armen 101 angeordnet ist, die um am Ausleger 28 angeordnete Gelenke 102 schwenken können.

Um den Halteträger 100 in seiner Höhe verstellen zu können, sind die Arme 101 durch Hülsen 103 an Hebeln 104 verstellbar geführt, deren eines Ende an den Gelenken 102 drehbar befestigt ist und deren anderes Ende mittels Zugfedern 105 gegen die Ausleger 28 gespannt ist, so dass die Federn 105 die Arme 101 in Fahrtrichtung F zu schwenken suchen und die Saatauslauf-Mündungsstücke 47 in etwa horizontaler Richtung verschoben werden.

Die mögliche vorderste Lage der Arme 101 und damit der Saatauslauf-Mündungsstücke 47 kann durch nicht dargestellte Anschläge, beispielsweise an den Gelenken 102, gegebenenfalls einstellbar, begrenzt sein.

Jedoch ist es auch möglich, dass der Halteträger 100 auf der Rückseite der Matte 31 federnd anliegt und damit deren Bewegungen folgt.

Im dargestellten Beispiel ist der Halteträger 100 ein im wesentlichen starres Vierkantprofil. Ein starrer Halteträger 100 ist dann von Vorteil, wenn der Halteträger von der Matte 31 einen Abstand haben und deren Bewegungen nicht beeinflussen soll.

Falls der Halteträger 100 an der Matte 31 anliegen soll, ist es zweckmässig, diesen in horizontaler Richtung flexibel auszubilden, beispielsweise als Flachband, welches einer Auslenkung einer Rechenzinke 25 örtlich nachgeben kann.

Am Rahmen 36 sind vor dem Rotorgehäuse 21 an einem Querbalken 110 Nivellierwerkzeuge 107 angeordnet.

Der Querbalken 110 ist höhenverstellbar, jedoch unfederbar am Rahmen 36 angeordnet. Am Querbalken 110 sind dazu Laschen 120 angeordnet, welche jeweils ein in vertikaler Richtung verlaufendes Langloch 121 und ein Rundloch 122 aufweisen. Am Rahmen 36 ist ein Winkelglied 123 angebracht, dessen eine Fläche parallel zur Lasche 120 verläuft und dessen andere Fläche die Lasche seitlich umgreift. Auf der zur Lasche 120 parallelen Fläche des Winkelgliedes 123 befindet sich eine vertikale Lochreihe (nicht sichtbar), so dass die Laschen 120 jeweils mittels Gewindebolzen mit den Winkelgliedern verschraubt werden können. Einer der Gewindebolzen 124 ist durch das Langloch 121 gesteckt und braucht zur Höhenverstellung des Querbalkens 110 nur gelöst zu werden, so dass Lasche und Winkelstück gegeneinander verschiebbar sind. Der andere jeweils durch die Rundlöcher gesteckte Bolzen wird ganz herausgenommen, um den Balken 110 nach oben bzw. unten zu verschieben, bis das Rundloch 122 sich mit einem der Löcher der Lochreihe am Winkelglied 123 deckt, so dass der weitere Gewindebolzen wieder eingeführt werden kann. Aufgrund der formschlüssigen Verbindung zwischen Lasche 120, Winkelglied 123 und den Gewindebolzen 124 brauchen letztere für eine feste Verankerung des Querbalkens 110 nur mässig angezogen zu werden.

In jedem Falle ist eine sichere und drehfeste Verbindung zwischen Laschen 120 und Winkelglied 123 und damit eine sichere und drehfeste Halterung des Querbalkens 110 gewährleistet.

Anstelle einer Lochreihe kann am Winkelglied 123 auch ein in Vertikalrichtung verlaufendes Langloch angeordnet sein, so dass ein Bolzen durch dieses Langloch und das Rundloch 122 an der Lasche 120 gesteckt werden kann. Zur Höhenverstellung brauchen dann nur die durch das Langloch 121 und das Rundloch 122 an den Laschen 120 gesteckten Gewindebolzen 124 leicht gelöst zu werden.

Gegebenenfalls kann zur Erleichterung der Höhenverstellung eine Hilfsvorrichtung zwischen Lasche 120 und Winkelglied 123 angebracht werden, beispielsweise eine Verstellschnecke.

Als Nivellierwerkzeuge 107 dienen am Querbalken 110 mittels Stiele 112 angeordnete Nivellierplatten 113, die etwa in Plattenmitte flächig an den Stielen 112, welche aus plattenförmigen Stücken bestehen, angeschweisst sind. Zur Befestigung der Stiele 112 am Querbalken 110 dienen Schellen 114, welche aufgrund ihres Vierkantprofils und des Vierkantprofils des Querbalkens 110 eine durch Formschluss drehfeste Verbindung zwischen Stielen 112 und Querbalken 110 gewährleisten, auch wenn die Schellen 114 nur wenig angespannt sind.

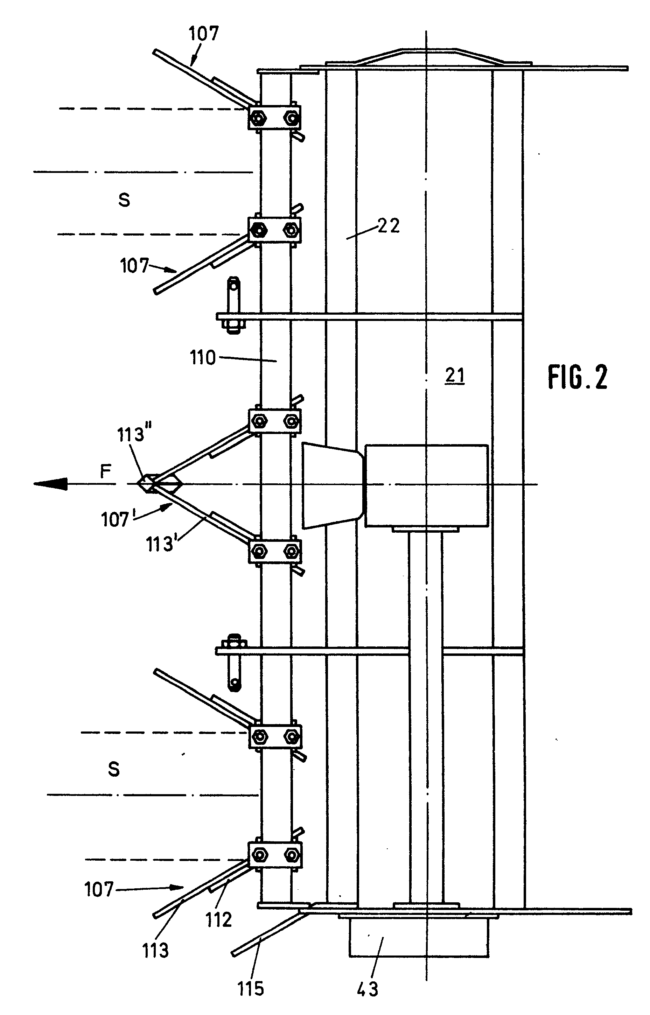

Wie insbesondere aus der Fig. 2 hervorgeht, sind die Nivellierplatten 113 beiderseits von Spurrillen S des Zugfahrzeuges 38 angeordnet und schräg zur Fahrtrichtung F gestellt, wobei die Hinterkanten der Nivellierplatten 113 jeweils in die Spurrillen S weisen. Auf diese Weise wird von den Antriebsrädern des Zugfahrzeuges 38 zu beiden Seiten hin verdrängte Erde wieder von beiden Seiten in die Spurrillen S geschoben.

Ein mittleres Werkzeug 107' besteht aus zwei Nivellierwerkzeugen, deren Nivellierplatten 113' keilförmig miteinander verbunden sind, wobei an der Keilspitze noch eine in Fahrtrichtung F weisende Verstärkung oder Schneideklinge 113'' angeordnet ist.

Am Rotorgehäuse 21 ist, wie Fig. 2 zeigt, auf einer Seite des Erdeinlaufes vorne eine Schubplatte 115 angeordnet, welche, in Draufsicht gesehen, schräg zur Fahrtrichtung angeordnet ist und durch Eingriff in die Erdoberfläche bei der Fahrt des Gerätes Erde zum Erdeinlauf führt. Diese Schubplatte 115 dient zum Schutz einer dahinter angeordneten Seitenverkleidung 43, welche ein seitlich angeordnetes Antriebsgetriebe des Rotors umschliesst, welches aufgrund dieser Anordnung gut zugänglich ist.

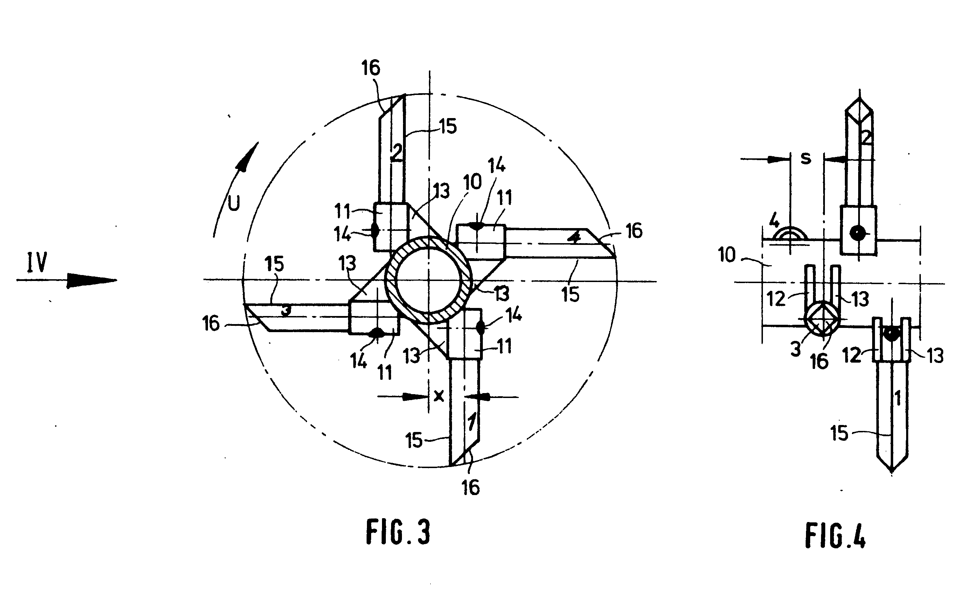

Der Zinkenrotor 21 besitzt gemäss den Fig. 3 und 4 auf einer hohlen Rotorwelle 10 angeordnete Zinken 1 bis 4, welche auswechselbar in Muffen 11 gehaltert sind, die ihrerseits mit Laschen 12, 13 an der Rotorwelle 10 befestigt sind. In den Muffen 11 werden die Zinken 1 bis 4 durch Sicherungsbolzen 14 festgehalten, welche quer zur Achse der Rotorwelle 10 und zur Zinkenachse durch Radialbohrungen in den Muffen 11 und eine damit fluchtende Querbohrung in den Zinken 1 bis 4 hindurchgeführt sind. Dabei sind die Zinken 1 bis 4 so gehaltert, dass die Längsachse der Zinken 1 bis 4 in einem Abstand X an der Achse der Rotorwelle 10 vorbeigeht.

Wie insbesondere aus der Fig. 4 hervorgeht, besitzen die Zinken 1 bis 4 ein quadratisches Profil, wobei die Zinken so in die Muffen 11 eingesetzt sind, dass sie mit einer Kante, welche eine keilförmige Schlagkante 15 bildet, in die Umlaufrichtung U weisen.

Zur Bildung von Spitzen an ihren äusseren Enden besitzen die Zinken 1 bis 4 unter einem spitzen Winkel zu den Schlagkanten 15 geneigte Stirnflächen 16, die hier aufgrund des quadratischen Querschnittes der Zinken Rautenform haben.

Die Zinken 1 bis 4 sind zueinander in axialer Richtung um einen Strichabstand S und in Umlaufrichtung U um einen Winkel versetzt, wobei die Zinke 1 gegenüber der in axialer Richtung folgenden Zinke 2 um 180°, gegenüber der dann nächstfolgenden Zinke 3 um 90° und der in axialer Richtung schliesslich folgenden Zinke 4 um 270° in Umlaufrichtung versetzt ist.

Entsprechende Zinkengruppen, welche gegeneinander in Umfangsrichtung um beliebige Winkel versetzt sein können, sind mehrfach auf der Rotorwelle 10 angeordnet.

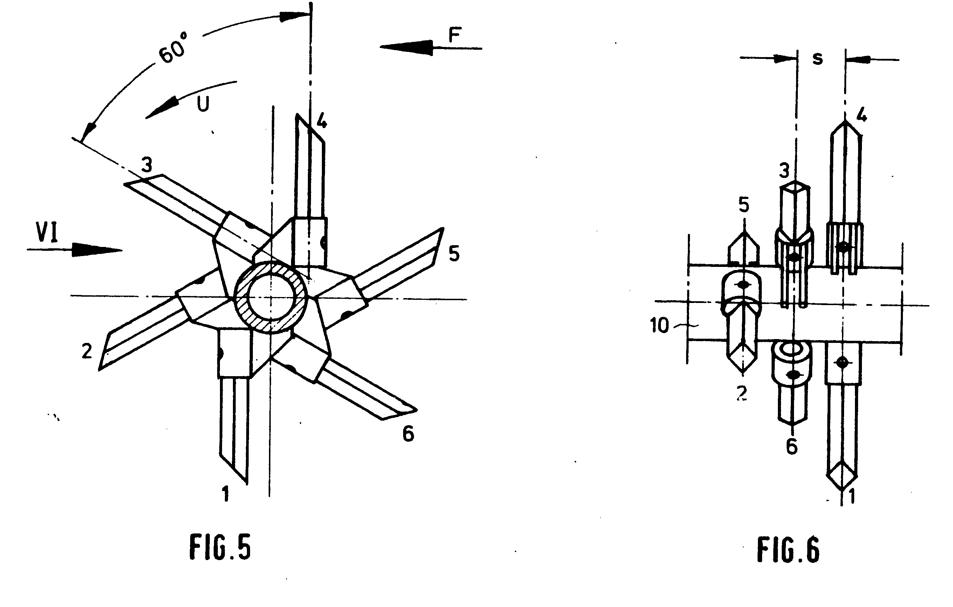

Die in den Fig. 5 und 6 dargestellte, besonders bevorzugte Ausführungsform des Zinkenrotors unterscheidet sich von der in den Fig. 3 und 4 dargestellten Konstruktion insbesondere dadurch, dass jeweils zwei Zinken 1 und 4, 3 und 6 bzw. 2 und 5, einander diametral gegenüber in einer Radialebene der Rotorwelle 10 angeordnet sind. Mit Strichabstand S aufeinanderfolgende Zinkenpaare 1 und 4, 3 und 6 bzw. 2 und 5 sind gegeneinander in Umfangsrichtung um jeweils 60° versetzt.

Bei dieser Ausführungsform sind also jeweils aus sechs Zinken bestehende Zinkengruppen auf der Rotorwelle 10 angeordnet. Im übrigen entspricht der Zinkenrotor der Fig. 5 und 6 dem anhand der Fig. 3 und 4 dargestellten Zinkenrotor.

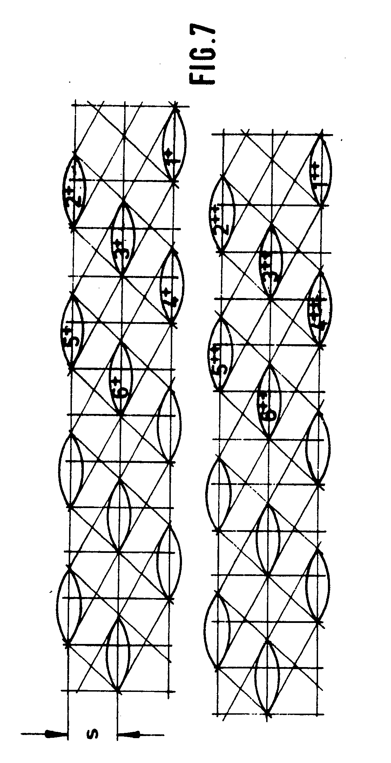

Wenn der in den Fig. 5 und 6 dargestellte Zinkenrotor 20 mit einer Fahrgeschwindigkeit von ca. 6 km/h und einer Rotationsgeschwindigkeit von 300 U/min in einer der Fahrtrichtung F entsprechenden Rotationsrichtung U über die Erdoberfläche bewegt wird, so berühren die Zinken 1 bis 6 entsprechend der Fig. 7 auf zueinander parallelen Strichen ca. alle 18 cm den Boden. Die Bodenberührungsstellen sind entsprechend den jeweiligen Bezugszeichen der Zinken 1 bis 6 mit $1^+$ bis $6^+$ bezeichnet. Ist auf der Rotorwelle 10 noch eine weitere Zinkengruppe angeordnet, die gegenüber der ersten z.B. um 13° in Umlaufrichtung versetzt ist, so ergeben sich gleichzeitig die Bodenberührungspunkte $1^{++}$ bis $6^{++}$.

Bei einem Strichabstand von ca. 6 cm erhält man eine besonders gleichmässige Verteilung der Bodenberührungspunkte. Diese Verteilung lässt sich mit dem Zinkenrotor der Fig. 5 und 6 bereits bei einer relativ geringen Umdrehungszahl erreichen, so dass einerseits der Zinkenverschleiss gering ist und andererseits auch der den Zinken entgegengesetzte Widerstand des Bodens gut beherrschbar bleibt.

Gegebenenfalls können die Zinken auch abwechselnd zur einen oder zur anderen Seite seitwärts geneigt sein, so dass einander radial gegenüberliegende Zinken den Boden auf unterschiedlichen Strichen berühren.

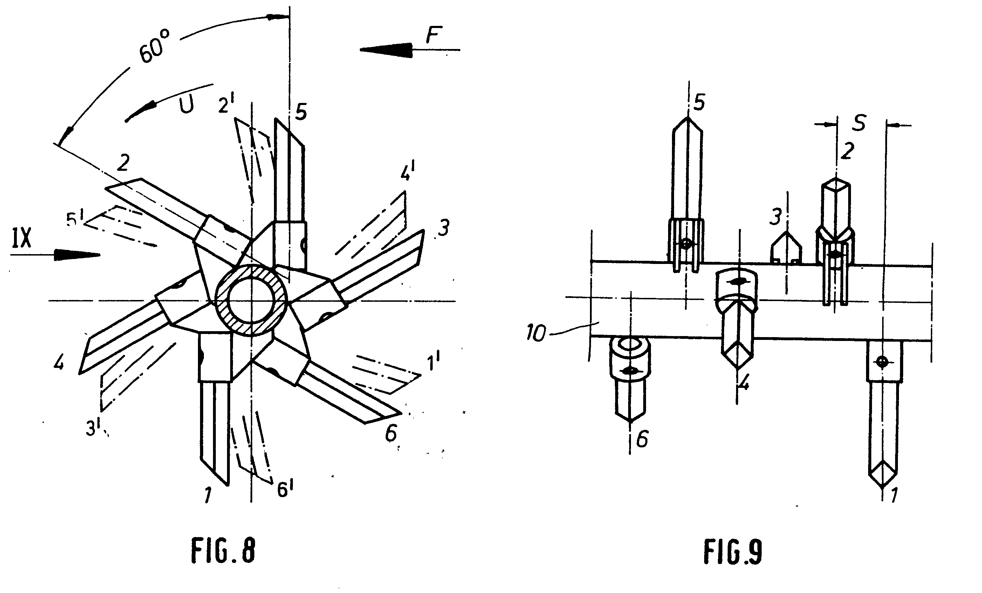

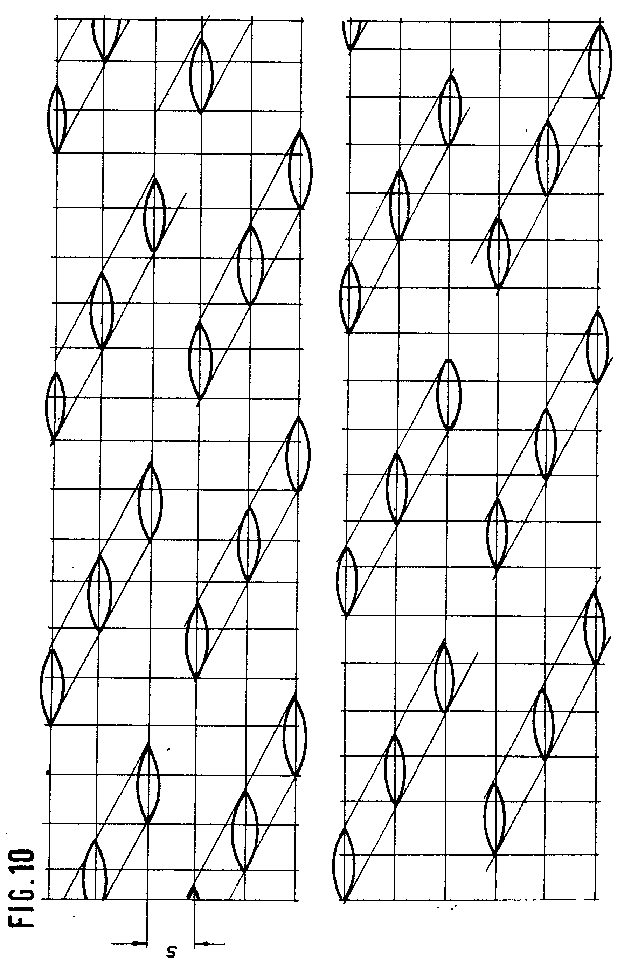

Die Fig. 8 und 9 zeigen eine weitere vorteilhafte Ausführungsform des Zinkenrotors 20, die sich besonders preisgünstig herstellten lässt. Die Fig. 10 zeigt eine der Fig. 7 entsprechende Darstellung der Zinkenspuren. Der Zinkenrotor 20 der Fig. 8 und 9 besitzt eine oder mehrere aus jeweils sechs Zinken 1 bis 6 bzw. 1' bis 6' bestehende Zinkengruppen, die, in Achsrichtung des Zinkenrotors gesehen, in Umfangsrichtung etwas versetzt zueinander angeordnet sind. Jede Zinke 1 bis 6 bzw. 1' bis 6' ist in einer separaten Radialebene des Zinkenrotors 20 angeordnet und hat von der nächsten Zinke einen Abstand S in Achsrichtung. Die ersten drei Zinken 1 bis 3 bzw. 1' bis 3' einer Zinkengruppe sind schraubenförmig zueinander angeordnet, wobei aufeinanderfolgende Zinken jeweils einen Winkel von 120° bilden. Entsprechendes gilt für die jeweils letzten drei Zinken 4 bis 6 bzw. 4' bis 6' einer Zinkengruppe. Die dritte Zinke 3 bzw. 3' und die vierte Zinke 4 bzw. 4' stehen einander jeweils diametral gegenüber.

Die Fig. 10 zeigt, dass auch beim Zinkenrotor der Fig. 9 und 10, trotz der geringen Zinkenzahl, ein gleichförmiges Arbeitsbild erreicht wird.

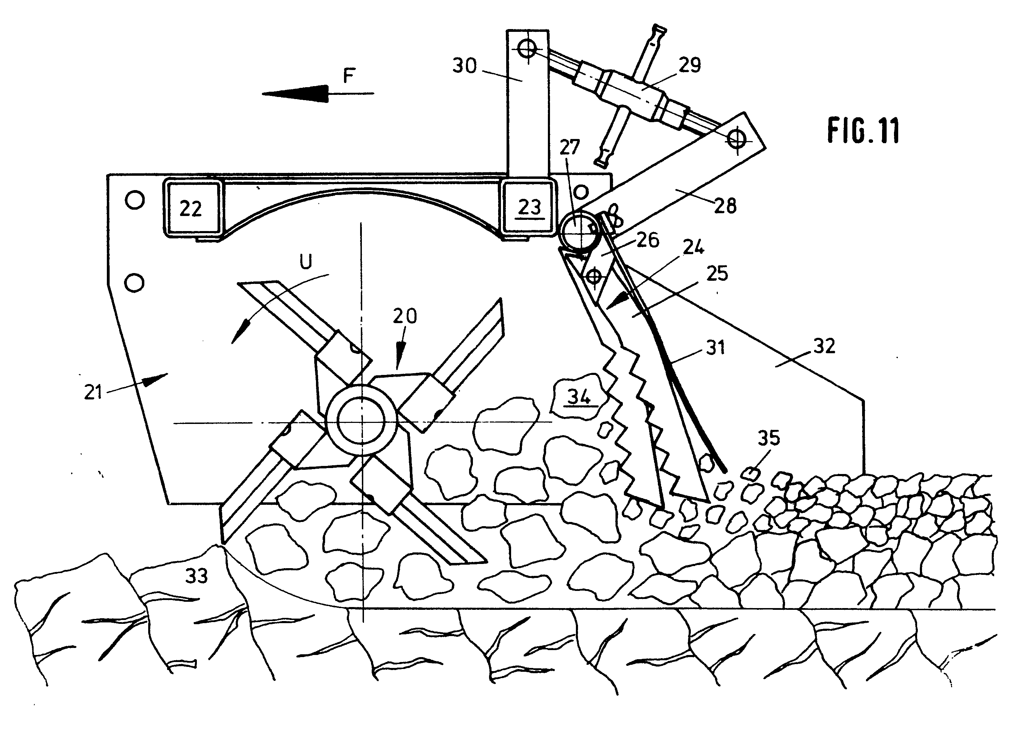

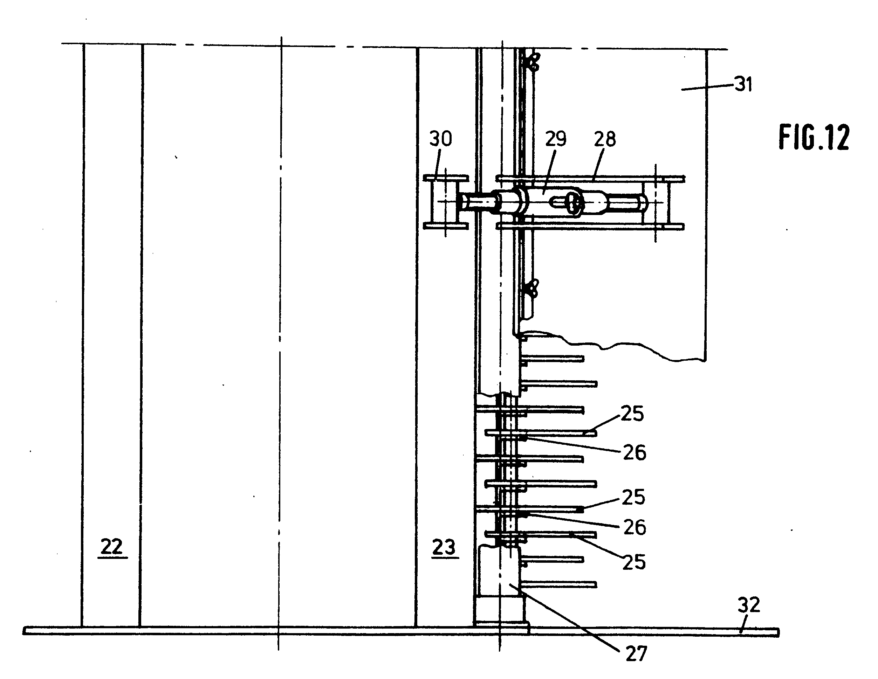

Die Fig. 11 und 12 zeigen das Rotorgehäuse 21 mit einer gegenüber der Fig. 1 abgewandelten Anordnung des Rechens 24. Hier ist der drehbare Stab 27 mit seinem drehfest verbundenen Ausleger 28 über eine Verstellspindel 29 mit einem am Querholm 23 befestigten Arm 30 abgestützt.

Die Anordnung des Rechens 24 ist vor allem für trockene Böden vorteilhaft, deren Schollen sicher zerkleinert werden.

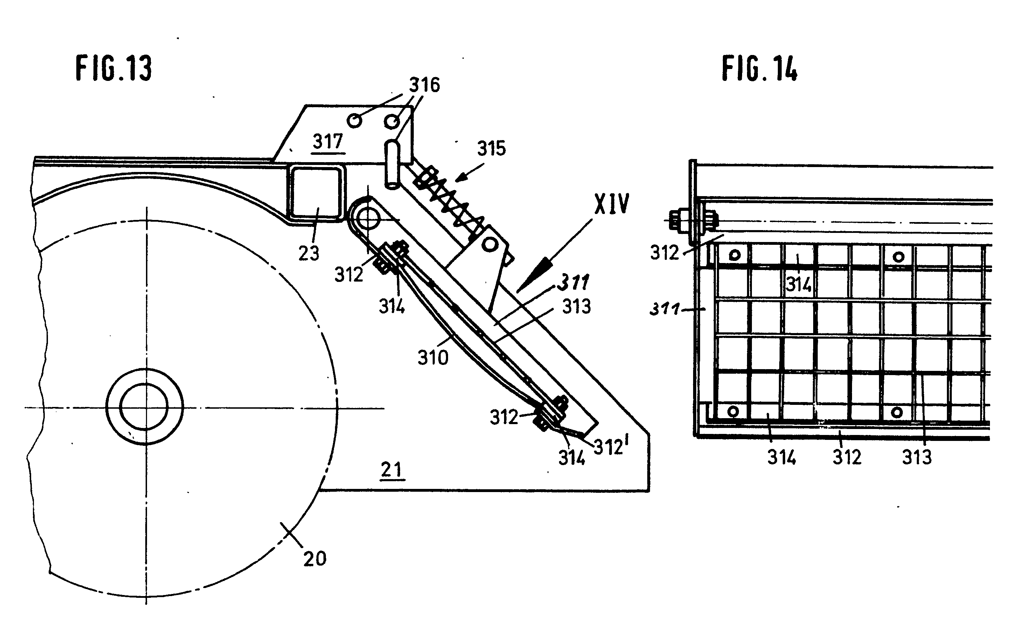

Für feuchte oder nasse Böden ist eine Anordnung gemäss den Fig. 13 und 14 vorzuziehen. Hier ist hinter dem nur schematisch dargestellten Zinkenrotor 20 eine das Rotorgehäuse 21 hinten abschliessende halbstarre Matte 310 angeordnet. Dazu sind am Querholm 23 verschwenkbare Haltearme 311 angeordnet, die mit Querlatten 312 rahmenförmig verbunden sind. Die untere Querlatte 312 weist eine etwas nach hinten abgewinkelte Streichfläche 312' auf, die gegebenenfalls über den vom Zinkenrotor 20 bearbeiteten Boden streicht. Die Matte 30 ist auf den Querlatten 312 mit Übermass befestigt und bildet deshalb zwischen den Querlatten 312 eine Wölbung, die sich bei Aufprall von Erdstücken verformt, so dass dieselben nicht an der Matte 310 haften bleiben.

Nach rückwärts kann die Matte 310 durch ein Gitter 313 in ihrer Beweglichkeit beschränkt werden. Dieses Gitter ist mittels Randleisten 314 unter Zwischenschaltung der Matte 310 auf den Querlatten 312 verschraubt.

Die Schrägstellung des die Matte 310 haltenden, aus den Haltearmen 311 und den Querlatten 312 bestehenden Rahmens lässt sich durch eine federnde Abstützung 315 einstellen, die sich dazu in Bohrungen 316 an einer Lasche 317 am Querholm 23 einsetzen lässt.

Es ist auch möglich, die Haltearme 311 drehfest an einem dem Stab 27 in Fig. 1 entsprechenden Teil anzuordnen, welches in Abhängigkeit von der Höheneinstellung der Krümelwalze 202 geschwenkt wird, so dass die Matte 310 eine von der Einstellung der Krümelwalze 202 abhängige Schräglage einnimmt.

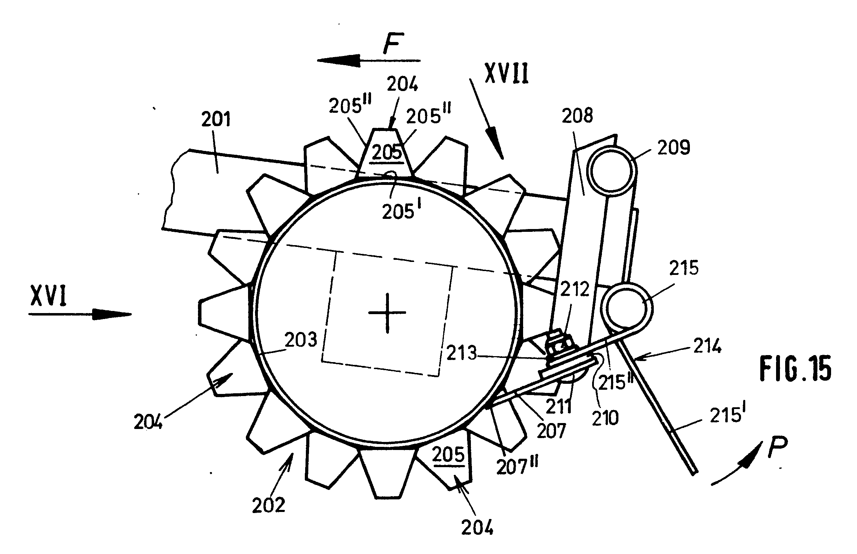

Die in den Fig. 15 bis 17 genauer dargestellte Krümelwalze 202 besitzt einen geschlossenen Walzenkörper 203 mit Zahnelementen 204.

Die Zahnelemente 204 bilden in Umfangsrichtung des Walzenkörpers 203 umlaufende Zahnreihen, welche in Achsrichtung des Walzenkörpers 203 einen Abstand A voneinander aufweisen. Zwischen jeweils in einer Zahnreihe aufeinanderfolgenden Zahnelementen 204 verbleibt eine Öffnung d, deren Grösse etwa der in Walzenumfangsrichtung gemessenen Längserstreckung eines Zahnelementes 204 entspricht. Die Zahnelemente 204 benachbarter Zahnreihen sind in der Weise gegeneinander in Umfangsrichtung versetzt, dass jeweils in Achsrichtung der Walze gesehen hinter einem Zahnelement 204 der einen Zahnreihe eine Öffnung zwischen den Zahnelementen 204 der anderen Zahnreihe angeordnet ist.

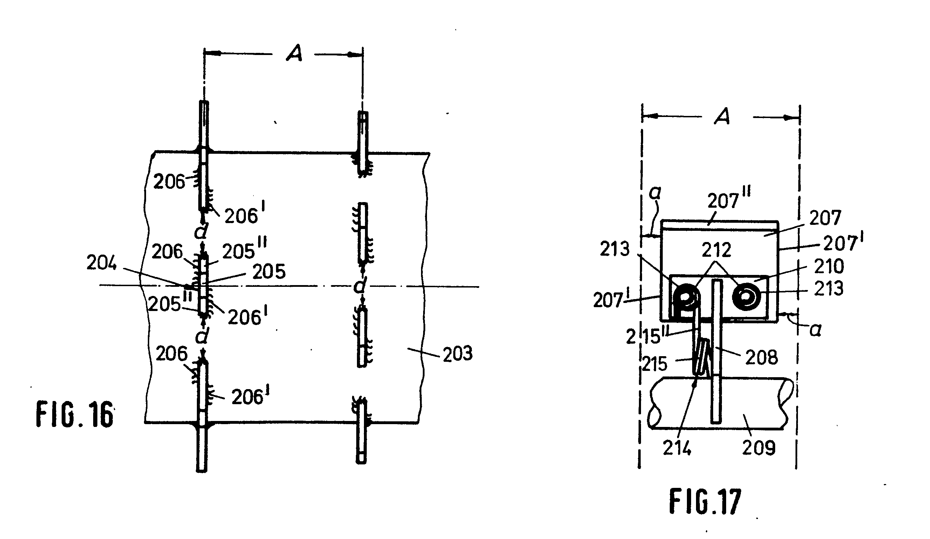

Die Zahnelemente 204 bestehen jeweils aus trapezförmigen Platten 205, die mit ihrer grossen Basiskante 205' auf der Oberfläche des Walzenkörpers 203 angeschweisst sind, und zwar, wie insbesondere die Fig. 16 zeigt, jeweils mittels zweier Schweissnähte 206 und 206', wobei die Schweissnaht 206 von der Mitte der Basiskante 205' der trapezförmigen Platte 205 auf deren einer Seite entlanggeführt ist und eine der Stirnkanten 205'' umgreift, während die andere Schweissnaht 206' in entsprechender Weise auf der anderen Seite der Platte 205 angeordnet ist und die andere der Stirnkanten 205'' umgreift. Diese Anordnung der Schweissnähte 206 und 206' bewirkt eine Verspannung der trapezförmigen Platten 205 und trägt somit zu deren Steifigkeit bei. Zwischen den Basiskanten 205' und der Oberfläche des Walzenkörpers vorhandene Spalte werden beim Schweissen mit Material ausgefüllt, deshalb brauchen die Basiskanten 205' vor der Verschweissung der Platten 205 mit dem Walzenkörper 203 nicht an dessen Wölbung angepasst zu werden.

Zwischen den Reihen der Zahnelemente 204 ist jeweils ein Abstreifer 207 angeordnet, dessen Breite geringer als der Abstand A der Zahnreihen ist, so dass zwischen den Seitenkanten und den Zahnreihen jeweils ein Zwischenraum a verbleibt. Die Abstreifer 207 liegen somit nur mit ihrer in Fahrtrichtung weisenden Kante 207'' an der Walzenoberfläche an, vorzugsweise mit spitzem Anstellwinkel, wie es in der Fig. 15 dargestellt ist. Aus dieser Figur ist ausserdem ersichtlich, dass der Abstreifer unterhalb der horizontalen Walzenmittelebene angeordnet ist. Die Abstreifer 207 werden von Haltearmen 208 getragen, die ihrerseits an einem vorzugsweise schwenkbaren Querglied 209 des Walzenrahmens 201 angeordnet sind, so dass die Abstreifer 207 gewünschtenfalls in Pfeilrichtung P vom Walzenkörper 204 weggeschwenkt werden können.

Zur Befestigung der Abstreifer 207 an den Haltearmen 208 dienen mit denselben T-förmig, beispielsweise durch Schweissung, verbundene Halteplatten 210, an denen die Abstreifer mittels Schraubbolzen 211 und Muttern 212 unter Zwischenschaltung von Unterlegscheiben 213 verspannt sind.

In Fahrtrichtung F hinter den Abstreifer 207 ist jeweils ein federndes Striegelelement 214 angeordnet, welches durch eine Schraubenfeder 215 gebildet ist, deren Endstücke 215' und 215'' über die Schraubenumfangsfläche in Tagentialrichtung hinausragen. Das Ende 215' greift hinter der Krümelwalze 202 in die Erdoberfläche ein und zerreisst das von den Abstreifern 207 von der Walzenoberfläche abgeschälte Erdreich. Das Endstück 215'' ist U-förmig umgebogen und zwischen der Unterlegscheibe 213 und der Halteplatte 210 an einer der Verschraubungen derselben mit einem der Abstreifer 207 eingespannt. Die Befestigungsmittel der Abstreifer 207 an den Haltearmenn 208 dienen also teilweise auch zur Befestigung der Striegelelemente 214.

Anstelle nur jeweils eines Striegelelementes 214, wie es in Fig. 17 dargestellt ist, können hinter jedem Abstreifer 207 auch zwei Striegelelemente 214, entsprechend der Zahl der Schraubverbindungen zwischen dem jeweiligen Abstreifer 207 und der zugehörigen Halteplatte 210, gegebenenfalls auch eine noch grössere Zahl angeordnet werden.

Aufgrund der Striegelelemente 214 können relativ breite Abstreifer 207 bei dem entsprechend grösseren Abstand A der Zahnreihen verwendet werden. Gegenüber bisherigen Krümelwalzen lässt sich dieser Abstand A zumindest verdoppeln. Da ausserdem die Seitenkanten 207' der Abstreifer 207 nicht an den Zahnelementen 204 entlanggleiten und diese jeweils mit Öffnungen d in Umfangsrichtung der Walze 202 in relativ kleiner Anzahl angeordnet sind, sind der Rollwiderstand der Krümelwalze 202 sowie die von den Abstreifern 207 verursachten Reibungswiderstände vergleichsweise gering, so dass die erfindungsgemässe Krümelwalze nur geringe Zugkraftanforderungen stellt. Gleichwohl wird überraschenderweise ein besonders gutes Arbeitsergebnis ohne von den Zahnelementen 204 oder den Striegelelementen 214 sichtbar hinterlassene Spuren erzielt.

Die im Vergleich zum Abstand A der Zahnreihen relativ schmalen Abstreifer 207 befreien den Walzenkörper überraschend wirksam von anhaftender Erde. Dazu trägt auch der Effekt bei, dass die von den Abstreifern erfasste Erde teilweise seitwärts zu den Zahnreihen hin verschoben wird, wobei sich auch die Verschmutzungen auf der Walzenoberfläche in den Ringzonen seitlich der Abstreifer lockern.

Die scharfkantige Form der Zahnelemente gewährleistet deren leichtes Eindringen in den Boden.

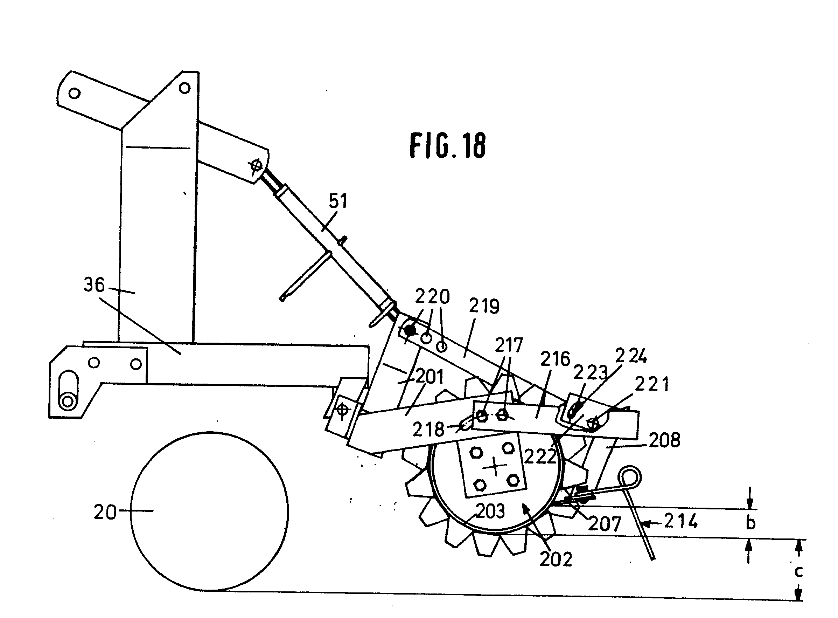

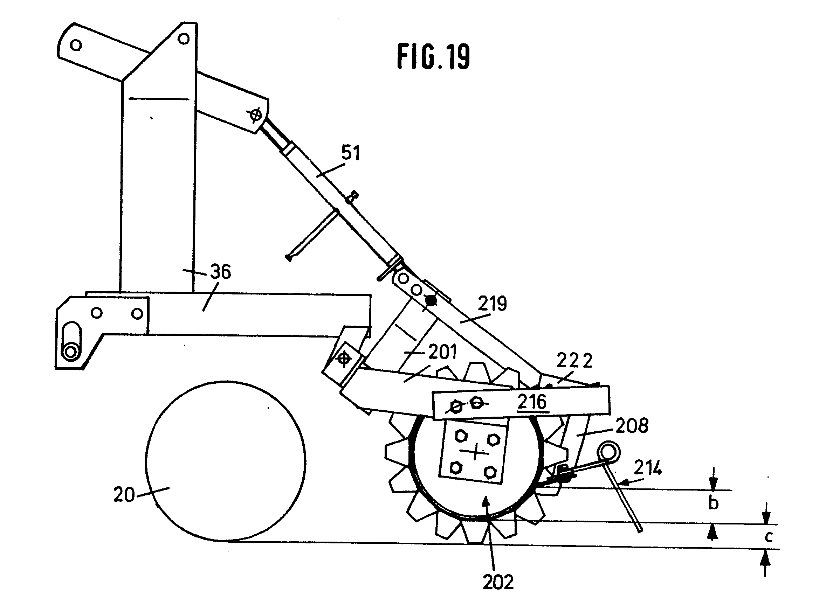

Die Fig. 18 und 19 zeigen eine bevorzugte Ausbildung des Hilfsrahmens 201 der Krümelwalze 202. Hier lassen sich die Abstreifer 207 und die Striegelelemente 214 unabhängig von der Höheneinstellung der Krümelwalze 202 und ihres Rahmens 201 gegenüber dem Rahmen 36 auf eine gewünschte Höhe bezüglich der Walzenachse einstellen.

An dem, in Achsrichtung der Walze 202 gesehen, winkelförmigen Hilfsrahmen 201, der mittels der Spindel 51 verstellbar am Rahmen 36 abgestützt ist, ist ein verstellbares Rahmenteil 216 angeordnet, welches mittels zweier Schraubbolzen 217 in einem bogenförmigen Langloch 218, dessen Krümmungsmittelpunkt in die Achse der Krümelwalze 202 fällt, am Hilfsrahmen 201 verstellbar verschraubt und mittels Abstützstangen 219, an denen eine Lochreihe 220 angeordnet ist, in unterschiedlichen Stellungen am Hilfsrahmen 201 abgestützt. An dem verstellbaren Rahmenteil 216 sind um Schwenkpunkte 221 schwenkbare Hebel 222 angeordnet, die drehfest mit einem nicht sichtbaren Querglied (entsprechend 209 in Fig. 15) verbunden sind, an dem die Abstreifer 207 mittels der Haltearme 208 befestigt sind. An den Hebeln 222 sind bogenförmige Langlöcher 223 angeordnet, deren Krümmungsmittelpunkt mit den Schwenkpunkten 221 zusammenfällt. Mittels in diese Langlöcher 223 eingesteckter Schrauben 224 können die Hebel 222 am Rahmenteil 216 verspannt werden.

Die Verstellbarkeit des Rahmenteils 216 dient zur Höheneinstellung der Abstreifer 207 und Striegelelemente 214. Die Verstellbarkeit der Hebel 222 dient dazu, die Abstreifer 207 so zu stellen, dass sie auf dem Walzenkörper 203 anliegen.

Die Fig. 18 und 19 zeigen zwei Höheneinstellungen c der Krümelwalze 202. Die Höhe b der Abstreifer 207 und Striegelelemente 214 ist in beiden Fällen auf den gleichen Wert eingestellt. Damit ist also die gewünschte optimale Fallhöhe der von den Abstreifern 207 vom Walzenkörper 203 abgeschälten Erde bei jeder Höheneinstellung der Krümelwalze 202 erreichbar, ebenso wie die gewünschte optimale Arbeitstiefe der Striegelelemente 214.

Beim Einsatz stützen sich die dargestellen Geräte auf der Krümelwalze 202 ab, deren Höheneinstellung bezüglich des Rahmens 36 die Arbeitstiefe der Bodenbearbeitungswerkzeuge bestimmt.

Am Zugfahrzeug 38 sind die Geräte beim Einsatz höhenveränderbar, in «Schwimmstellung» angekoppelt.

## Patentansprüche

1. Zapfwellengetriebenes Bodenbearbeitungsgerät mit höhenveränderbar — insbesondere mittels Dreipunktaufhängung — an ein das Bodenbearbeitungsgerät tragendes Zugfahrzeug ankoppelbarem Rahmen (36) sowie daran mit in Fahrtrichtung (F) vor einem zapfwellengetriebenen Zinkenrotor (20) austauschbar angeordneten feststehenden Bodenbearbeitungswerkzeugen (107), einer hinter dem Zinkenrotor (20) angeordneten Abdeckung (24, 31, 310), welche aufgeworfene Erde zur Bodenoberfläche leitet, sowie einer hinter der Abdeckung (24, 31, 310) höhenverstellbar angeordneten Krümelwalze (202) mit im wesentlichen geschlossener Umfangsfläche und in Umfangsrichtung in Reihe angeordneten Zahnelementen (204), dadurch gekennzeichnet, dass

— als feststehende Bodenbearbeitungswerkzeuge beiderseits der vom Zugfahrzeug (38) hinterlassenen Spurrillen (S) höhenverstellbare Nivellierwerkzeuge (107) angeordnet sind, welche mittels im wesentlichen parallel zur Hochachse des Gerätes ausgerichteter, schräg zur Fahrtrichtung (F) stehender und mit ihren hinteren Endstücken in die Spurrillen (S) weisender Nivellierplatten (113) Erde in die Spurrillen (S) zu schieben suchen,

— der mit rahmenfestem Rotorgetriebe (43) am Rahmen (36) angeordnete Zinkenrotor (20) in die Fahrtrichtung (F) unterstützender Umlaufrichtung (U) antreibbar ist,

— die Abdeckung (24, 31, 310) hinter dem Zinkenrotor (20) beweglich und mit gegeneinander beweglichen Teilen angeordnet ist,

— die Krümelwalze (202) an einem Hilfsrahmen (201) angeordnet ist, der zur Höhenverstellung über Gelenke (50) mit dem Rahmen (36) verbunden ist,

— zwischen den Zahnelementen (204) der Krümelwalze (202) mit Abstand (a) von denselben Abstreifer (207) angeordnet sind, hinter denen in Fahrtrichtung (F) Striegelelemente (214) mit federnden Enden (215') in doe Bodenfläche eingreifen.

2. Bodenbearbeitungsgerät mit Nivellierwerkzeugen (107), welche Erde in vom Zugfahrzeug (38) hinterlassene Spurrillen (S) zu schieben suchen, insbesondere nach Anspruch 1, dadurch gekennzeichnet, dass die im wesentlichen parallel zur Hochachse ausgerichteten, schräg zur Fahrtrichtung (F) stehenden und mit ihren hinteren Endstücken in die Spurrillen (S) weisenden Nivellierplatten (113) mittels etwa in Plattenmitte angeordneter Stiele (112), die zusammen mit der jeweiligen Nivellierplatte (113) eine etwa T-förmige Einheit bilden, am Rahmen (36) bzw. einem Rahmenteil angeordnet sind.

3. Bodenbearbeitungsgerät nach Anspruch 2, dadurch gekennzeichnet, dass als Stiele (112) plattenförmige Stücke angeordnet sind.

4. Bodenbearbeitungsgerät nach einem der Ansprüche 2 oder 3, dadurch gekennzeichnet, dass an den von den Nivellierplatten (113) abgewandten Enden der Stiele (112) Schellen (114) zur Befestigung an einem Querbalken (110) angeordnet sind, wobei Querbalken und Schellen vorzugsweise ein mehreckiges Profil aufweisen.

5. Bodenbearbeitungsgerät nach einem der Ansprüche 1 bis 4, dadurch gekennzeichnet, dass die Nivellierplatten (113) unter einem kleinen Winkel zur Horizontalen geneigt angeordnet sind.

6. Bodenbearbeitungsgerät nach einem der Ansprüche 1 bis 5, dadurch gekennzeichnet, dass als mittleres Nivellierwerkzeug (107') zwei Nivellierwerkzeuge mit keilförmig miteinander verbundenen Nivellierplatten (113') vorgesehen sind (Fig. 2).

7. Bodenbearbeitungsgerät nach Anspruch 6, dadurch gekennzeichnet, dass an der Keilspitze eine in Fahrtrichtung nach vorn weisende vertikale Schneideplatte (113'') angeordnet ist.

8. Bodenbearbeitungsgerät nach einem der Ansprüche 1 bis 7, dadurch gekennzeichnet, dass die Nivellierplatten (113), in Fahrtrichtung (7) gesehen, einander überlappende Arbeitsbereiche aufweisen.

9. Bodenbearbeitungsgerät nach einem der Ansprüche 1 bis 8, dadurch gekennzeichnet, dass die Nivellierwerkzeuge (107) an einem Querbalken (110) angeordnet sind, der höhenverstellbar am Rahmen (36) angeordnet ist.

10. Bodenbearbeitungsgerät mit einem Zinkenrotor (20), insbesondere nach einem der Ansprüche 1 bis 9, dadurch gekennzeichnet, dass die Zinken (1 bis 6) jeweils eine in Umlaufrichtung (U) weisende Schlagkante (15) mit keilförmigem Querschnitt aufweisen.

11. Bodenbearbeitungsgerät nach Anspruch 10, dadurch gekennzeichnet, dass die Zinken (1 bis 6) einen über ihre Länge im wesentlichen gleichbleibenden rautenförmigen oder — vorzugsweise quadratischen Querschnitt haben.

12. Bodenbearbeitungsgerät nach einem der Ansprüche 10 und 11, dadurch gekennzeichnet, dass die Zinken (1 bis 6) schräg unter einem spitzen Winkel zur Schlagkante (15) etwa parallel zur Rotorwelle (10) verlaufende äussere Stirnflächen (16) besitzen.

13. Bodenbearbeitungsgerät nach einem der Ansprüche 10 bis 12, dadurch gekennzeichnet, dass die Zinken (1 bis 6) mit einem radialen Abstand von der Rotorwelle (10) so angeordnet sind, dass die Achse der Rotorwelle (10) in Umlaufrichtung (U) der Zinken (1 bis 6) gesehen, vor der Schlagkante (15) verläuft.

14. Bodenbearbeitungsgerät nach einem der Ansprüche 10 bis 13, dadurch gekennzeichnet, dass die Zinken (1 bis 6) in Axialrichtung und in Umlaufrichtung (U) der Rotorwelle (10) in Form einer oder mehrerer Schrauben zueinander versetzt angeordnet sind.

15. Bodenbearbeitungsgerät nach einem der Ansprüche 10 bis 14, dadurch gekennzeichnet, dass jeweils zwei Zinken (1, 4; 2, 5; 3, 6) annähernd in einer Radialebene zur Rotorwelle (10) einander diametral gegenüber angeordnet sind, wobei das in Axialrichtung der Rotorwelle jeweils benachbarte Zinkenpaar in Umfangsrichtung um einen Winkel, vorzugsweise von 60°, versetzt ist.

16. Bodenbearbeitungsgerät nach einem der Ansprüche 10 bis 14, dadurch gekennzeichnet, dass der Zinkenrotor (20) mehrere aus jeweils sechs Zinken (1 bis 6, 1' bis 6') bestehende Zinkengruppen aufweist, die in Umfangsrichtung (U) etwas versetzt zueinander angeordnet sind und deren Zinken (1 bis 6, 1' bis 6') jeweils in einer separaten Radialebene des Zinkenrotors (20) angeordnet sind, wobei die ersten drei (1 bis 3, 1' bis 3') und die letzten drei (4 bis 6') Zinken einer Zinkengruppe jeweils in einer Schraubenlinie mit einem Winkel von etwa 120° zwischen aufeinanderfolgenden Zinken angeordnet sind und die dritte (3, 3') und vierte (4, 4') Zinke einer Zinkengruppe einander, in Achsrichtung des Zinkenrotors gesehen, diametral gegenüberliegen.

17. Bodenbearbeitungsgerät nach einem der Ansprüche 10 bis 16, dadurch gekennzeichnet, dass an der Rotorwelle (10) Muffen (11), insbesondere etwa tangential zur Rotorwelle (10), angeordnet sind, in die die Zinken (1 bis 6) austauschbar und arretierbar eingesteckt sind.

18. Bodenbearbeitungsgerät nach einem der Ansprüche 10 bis 17, dadurch gekennzeichnet, dass die Zinken (1 bis 6) in den Muffen (11) durch quer zur Rotorwelle (10) angeordnete Sicherungsbolzen (14) festgehalten sind, die in Radialbohrungen in den Muffen und daran anschliessende Bohrungen in den Zinken einführbar sind.

19. Bodenbearbeitungsgerät mit einem Zinkenrotor (20) und einer hinter diesem angeordneten Abdeckung (24, 31), insbesondere nach einem der Ansprüche 1 bis 18, dadurch gekennzeichnet, dass zur weiteren Zerkleinerung von Erdschollenstücken (34), wie sie vom Zinkenrotor (20) hinterlassen werden, ein Rechen (24) mit klinkenartigen Rechenzinken (25) angeordnet ist, die schwenkbar, dem Widerstand des Bodens nachgebend, aufgehängt und auf ihrer Rückseite mittels einer die Rückseite der Rechenzinken zumindest teilweise abdeckenden Matte (31) belastet sind.

20. Bodenbearbeitungsgerät nach Anspruch 19, dadurch gekennzeichnet, dass der Rechen (24) als Gehäuserückwand und Prallfläche für die vom Zinkenrotor (20) aufgeworfenen Erdschollenstücke (34) am Gehäuse (21) des Zinkenrotors (20) angeordnet ist.

21. Bodenbearbeitungsgerät nach einem der Ansprüche 19 und 20, dadurch gekennzeichnet, dass die Rechenzinken (25) sägezahnförmige Vorderkanten besitzen.

22. Bodenbearbeitungsgerät nach einem der Ansprüche 19 bis 21, dadurch gekennzeichnet, dass die Rechenzinken (25), in Draufsicht gesehen, zickzackförmig zueinander versetzt angeordnet sind.

23. Bodenbearbeitungsgerät nach einem der Ansprüche 19 bis 22, dadurch gekennzeichnet, dass der Schwenkbereich der Rechenzinken (25) in Fahrtrichtung (F) des Bodenbearbeitungsgerätes durch einen verstellbaren Anschlag (drehbarer Stab 27) begrenzt ist.

24. Bodenbearbeitungsgerät mit einem Zinkenrotor (20) und einer hinter diesem angeordneten Abdeckung, insbesondere nach einem der Ansprüche 1 bis 18, dadurch gekennzeichnet, dass die Abdeckung als flexible Prallfläche (310) ausgebildet ist, die vom Zinkenrotor (20) aufgeworfene Erdschollenstücke auf die Erdoberfläche lenkt.

25. Bodenbearbeitungsgerät nach Anspruch 24, dadurch gekennzeichnet, dass als Prallfläche zwischen zwei Querlatten (312) eine flexible Matte (310) mit Übermass, eine Wölbung bildend, angeordnet ist.

26. Bodenbearbeitungsgerät nach Anspruch 25, dadurch gekennzeichnet, dass hinter der Matte eine Abstützung, beispielsweise in Form eines Gitters (313), angeordnet ist, welche die Bewegungsmöglichkeit der Matte nach hinten begrenzt.

27. Bodenbearbeitungsgerät mit einem Zinkenrotor (20) und einem dahinter angeordneten Rechen (24) oder einer flexiblen Matte (31 bzw. Prallfläche (310), insbesondere nach einem der Ansprüche 19 bis 26, dadurch gekennzeichnet, dass hinter dem Rechen (24), der Matte (31) oder der Prallfläche (310) Saatauslauf-Mündungsstücke (47) einer Drillvorrichtung (45) auf einem in horizontaler Richtung beweglich aufgehängten Halteträger (100) angeordnet sind.

28. Bodenbearbeitungsgerät nach Anspruch 27, dadurch gekennzeichnet, dass der bzw. die Halteträger (100) höhenverstellbar sind.

29. Bodenbearbeitungsgerät nach einem der Ansprüche 27 und 28, dadurch gekennzeichnet, dass der horizontal bewegliche Halteträger (100) als im wesentlichen in horizontaler Richtung flexible Leiste ausgebildet ist, welche an die Rückseite der Rechenzinken (25) bzw. Matte (31) oder Prallfläche (310) anlegbar ist.

30. Bodenbearbeitungsgerät nach einem der Ansprüche 27 bis 29, dadurch gekennzeichnet, dass der horizontal bewegliche Halteträger (100) im wesentlichen starr ist.

31. Bodenbearbeitungsgerät nach einem der Ansprüche 27 bis 30, dadurch gekennzeichnet, dass der Halteträger (100) in einem Abstand von der Rückseite der Rechenzinken (25) bzw. Matte (31) oder Prallfläche (310) horizontal beweglich und vorzugsweise verstellbar gehaltert ist.

32. Bodenbearbeitungsgerät nach einem der Ansprüche 27 bis 31, dadurch gekennzeichnet, dass der bzw. die Halteträger (100) an Schwenkarmen (101) angeordnet sind.

33. Bodenbearbeitungsgerät nach einem der Ansprüche 27 bis 32, dadurch gekennzeichnet, dass der bzw. die Halteträger (100) durch eine Federvorrichtung (105) beaufschlagt sind, die die Saatauslauf-Mündungsstücke (47) entgegen dem Bodenwiderstand in Fahrtrichtung (F) zu schieben sucht.

34. Bodenbearbeitungsgerät nach einem der Ansprüche 19 bis 33, dadurch gekennzeichnet, dass die grösste Arbeitstiefe des Rechens (24), die Höheneinstellung der Prallfläche (310) und/oder die Höheneinstellung der Saatauslauf-Mündungsstücke (47) an die Höheneinstellung der Krümelwalze (202) gekoppelt ist.

35. Bodenbearbeitungsgerät nach Anspruch 1, dadurch gekennzeichnet, dass die Abstreifer (207), in Achsrichtung der Walze (202) gesehen, unterhalb der horizontalen Mittelebene an der Walzenoberfläche anliegen.

36. Bodenbearbeitungsgerät mit einer Krümelwalze (202) mit im wesentlichen geschlossener Umfangsfläche und in Umfangsrichtung in Reihe angeordneten Zahnelementen (204), zwischen denen mit Abstand (a) von denselben Abstreifer (207) angeordnet sind, hinter denen in Fahrtrichtung (F) Striegelelemente (214) mit federnden, in die Bodenfläche eingreifenden Enden (215') anbringbar sind, insbesondere nach einem der Ansprüche 1 bis 35, dadurch gekennzeichnet, dass die Striegelelemente (214) abnehmbar bzw. austauschbar befestigt sind, wobei die zur mittelbaren bzw. unmittelbaren Befestigung der Abstreifer (207) am Hilfs- bzw. Walzenrahmen (201) dienenden Befestigungsmittel, vorzugsweise Schrauben (211) und Muttern (212), zugleich zur Befestigung der Striegelelemente (214) dienen.

37. Bodenbearbeitungsgerät nach einem der Ansprüche 1 bis 35, dadurch gekennzeichnet, dass die Striegelelemente (214) als Schraubenfederelemente mit etwa quer zur Schraubenachse angeordneten, über die Schraubenumfangsfläche hinausragenden Endstücken (215', 215'') angeordnet sind, deren eines jeweils, mittelbar bzw. unmittelbar, am Walzenrahmen angeordnet ist.

38. Bodenbearbeitungsgerät nach einem der Ansprüche 1 bis 37, dadurch gekennzeichnet, dass die Striegelelemente (214), vorzugsweise mittels U-förmig umgebogener Enden (215''), an den Abstreifern (207) befestigt sind.

39. Bodenbearbeitungsgerät mit Krümelwalze mit auf einem umfangsseitig geschlossenen oder im wesentlichen geschlossenen Walzenkörper (203) engeordneten, in Umfangsrichtung ausgerichteten Zahnreihen mit zwischen den Zahnreihen angeordneten, auf dem Walzenkörper mit vorzugsweise spitzem Anstellwinkel anliegenden Abstreifern (207), insbesondere nach einem der Ansprüche 1 bis 38, dadurch gekennzeichnet, dass als Zahnelemente etwa trapezförmige Platten (205) angeordnet sind, die an ihrer langen Basiskante (205') auf der Walzenoberfläche (203) befestigt sind.

40. Bodenbearbeitungsgerät nach Anspruch 39, dadurch gekennzeichnet, dass die trapezförmigen Platten (205) an ihrer langen Basiskante mit der Walzenoberfläche (203) verschweisst sind, wobei, in Achsrichtung der Walze (202) gesehen, die Schweissnaht (206, 206') an der einen Hälfte der Basiskante auf der Vorderseite und an der anderen Hälfte der Basiskante auf der Rückseite der Platten angeordnet ist und vorzugsweise auf der Walzenoberfläche jeweils um die in bzw. entgegen der Umlaufrichtung der Walze (202) gerichteten Stirnkanten (205'') der Platte (205) um dieselbe etwas herumgezogen ist.

41. Bodenbearbeitungsgerät nach einem der Ansprüche 39 und 40, dadurch gekennzeichnet, dass die Zahnelemente (204) in Achsrichtung der Walze (202) gesehen, in Umfangsrichtung versetzt zueinander angeordnet sind.

42. Bodenbearbeitungsgerät nach einem der Ansprüche 39 bis 41, dadurch gekennzeichnet, dass zwischen benachbarten Zahnelementen (204) einer Zahnreihe jeweils ein etwa der Breite der Zahnelemente (204) entsprechender Abstand vorhanden ist.

43. Bodenbearbeitungsgerät nach einem der Ansprüche 1 bis 42, dadurch gekennzeichnet, dass die Abstreifer (207) und/oder Striegelelemente (214) höhenverstellbar bezüglich der Krümelwalze (202) angeordnet sind.

**Claims**

1. A power take-off shaft driven ground preparation machine comprising a frame (36) which can be vertically adjustable coupled to a tractor vehicle which carries the ground preparation machine, in particular by means of a three point suspension, fixed ground preparation tools (107) exchangeably arranged on the frame in front of a power take-off shaft driven rotor tiller (20) as seen in the direction of travel (F); a cover (24, 31, 310) arranged behind the rotor-tiller (20) which directs the earth which is thrown upwardly onto the ground; and also a crushing roller (202) which is vertically adjustably arranged behind the cover (24, 31, 310) and which as substantially closed peripheral surface and tooth elements (204) arranged in rows in the peripheral direction, characterised in that

— vertically adjustable levelling tools (107) are arranged as fixed ground preparation tools on both sides of the tracks (S) left by the tractor vehicle (38), with said levelling tools (107) trying to push earth into the tracks (S) by means of levelling plates (113) which are aligned substantially parallel to the vertical axis of the machine, which are inclined to the direction of travel (F) and the rear end pieces of which point into the tracks (S),

— the rotor-tiller which is arranged on the frame (36) with a rotor transmission (43) fixedly mounted on the frame can be driven in a direction of rotation (U) which assists progress in the direction of travel (F),

— the cover (24, 31, 310) is movably arranged behind the rotor tiller (20) and with mutually movable parts,

— the crushing roller (202) is arranged on an auxiliary frame (201) which is connected to the frame (36) via hinges (50) for vertical adjustment,

— scrapers (207) are arranged between the tooth elements (204) of the crushing roller (202) with a spacing (a) from the tooth elements, with tyne elements (214) with sprung ends (215') engaging in the around surface behind the scrapers (207) in the direction of travel.

2. A ground preparation machine having levelling tools (107) which try to push earth into the tracks (S) left by the tractor vehicle (38), in particular in accordance with claim 1, characterised in that the levelling plates (113) which are aligned substantially parallel to the vertical axis, which are inclined to the direction of travel (F) and the rear end pieces of which point into the tracks (S) are arranged on the frame (36), or on a frame part, by means of struts (112) which are arranged approximately at the plate centres and which form, together with the respective levelling plate (113), an approximately T-shaped unit.

3. A ground preparation machine in accordance with claim 2 and characterized in that plate-like parts are arranged to form the struts (112).

4. A ground preparation machine in accordance with one of the claims 2 or 3 and characterized in that shackles (114) are arranged at the ends of the struts (112) remote from the levelling plates (113) for attachment to a transverse beam (110), with the transverse beam and the shackles preferably having a polygonal profile.

5. A ground preparation machine in accordance with one of the claims 1 to 4 and characterized in that the levelling plates (113) are inclined at a small angle to the horizontal.

6. A ground preparation machine in accordance with one of the claims 1 to 5 and characterized in that two levelling tools with levelling plates (113') connected together in wedge-like form (Fig. 2) are provided as a central levelling tool (107').

7. A ground preparation machine in accordance with claim 6 and characterized in that a vertical cutting plate (113'') which is directed forwardly in the direction of travel is arranged at the apex of the wedge.

8. A ground preparation machine in accordance with one of the claims 1 to 7 and characterized in that the levelling plates (113) have overlapping working regions as seen in the direction of travel (7).

9. A ground preparation machine in accordance with one of the claims 1 to 8 and characterized in that the levelling tools (107) are arranged on a transverse beam (110) which is vertically adjustably arranged on the frame (36).

10. A ground preparation machine with a rotor-tiller (20), in particular in accordance with one of the claims 1 to 9 and characterized in that the teeth (1 to 6) each have a striker edge (15) of wedge-like cross-section which points in the direction of rotation (U).

11. A ground preparation machine in accordance with claim 10 and characterized in that the teeth (1 to 6) have a rhombic or —preferably — square cross-section which remains constant over their length.

12. A ground preparation machine in accordance with one of the claims 10 and 11 and characterized in that the teeth (1 to 6) have outer end faces (16) which extend at an acute angle to the striker edge (15) substantially parallel to the rotor shaft (10).

13. A ground preparation machine in accordance with one of the claims 10 to 12 and characterized in that the teeth (1 to 6) are arranged radially spaced from the rotor shaft (10) so that the axis of the rotor shaft (10), as seen in the direction of rotation (U) of the teeth (1 to 6), extends in front of the striker edges (15).

14. A ground preparation machine in accordance with one of the claims 10 to 13 and characterized in that the teeth (1 to 6) are arranged displaced from one another in the axial direction, and in the direction of rotation (U) of the rotor shaft (10), in the form of one or more threads.

15. A ground preparation machine in accordance with one of the claims 10 to 14 and characterized in that pairs of teeth (1, 4; 2, 5; 3, 6) are arranged approximately in a radial plane of the rotor shaft (10) diametrically opposite to one another, with the neighbouring pair of teeth in the axial direction of the rotor shaft being in each case displaced in the peripheral direction by an angle of preferably 60°.

16. A ground preparation machine in accordance with one of the claims 10 to 14 and characterized in that the rotor-tiller (20) has several groups of teeth each comprising six teeth (1 to 6, 1' to 6') which are arranged somewhat displaced from each other in the peripheral direction (U) and the teeth of which (1 to 6, 1' to 6') are in each case arranged in a separate radial plane of the rotor-tiller (20), with the first three (1 to 3, 1' to 3') and the last three (4 to 6') teeth of a group of teeth being arranged in each case in a helical line with an angle of approximately 120° between sequential teeth and with the third (3, 3') and fourth (4, 4') teeth of a group of teeht lying diametrically opposite to one another as seen in the axial direction of the rotor-tiller.

17. A ground preparation machine in accordance with one of the claims 10 to 16 and characterized in that sockets (11) into which the teeth (1 to 6) are exchangeably and securably inserted are arranged on the rotor shaft (10), in particular approximately tangential thereto.

18. A ground preparation machine in accordance with one of the claims 10 to 17 and characterized in that the teeth (1 to 6) are secured in the sockets (11) by securing bolts (14) which are arranged transversely to the rotor shaft (10) and are insertable into radial bores in the sleeves and adjoining bores in the teeth.

19. A ground preparation machine with a rotor-tiller (20) and a cover (24, 31) arranged behind the latter, in particular in accordance with one of the claims 1 to 18, characterized in that a rake (24) with blade-like rake tynes (25) is arranged to further comminute earth clod pieces (34) as left by the rotor-tiller (20), with the rake tynes (25) being pivotally suspended and yielding to the resistance of the ground and being loaded at their rear sides by means of a mat (31) which at least partially covers the rear sides of the rake tynes.

20. A ground preparation machine in accordance with claim 19 and characterized in that the rake (24) is arranged on the housing (21) of the rotor-tiller (20) as a housing rear wall and impact surface for the earth clod pieces (34) thrown up by the rotor-tiller (20).

21. A ground preparation machine in accordance with one of the claims 19 and 20 and characterized in that the rake tynes (25) have sawtooth-like leading edges.

22. A ground preparation machine in accordance with one of the claims 19 to 21 and characterized in that the rake tynes (25) are arranged displaced in zig-zag-like form relative to one another as seen in plan view.

23. A ground preparation machine in accordance with one of the claims 19 to 22 and characterized in that the pivotal range of the rake teeth (25) in the direction of travel (F) of the ground preparation machine is limited by an adjustable abutment (rotatable bar 27).

24. A ground preparation machine with a rotor-tiller (20) and a cover (24, 31) arranged behind the latter, in particular in accordance with one of the claims 1 to 18, and characterized in that the cover is constructed as a flexible impact surface (310) which deflects earth clod pieces thrown up by the rotor-tiller (20) onto the earth surface.

25. A ground preparation machine in accordance with claim 24 and characterized in that an over-dimensioned flexible mat (310) which forms an arch is arranged as an impact surface between two transverse battens (312).

26. A ground preparation machine in accordance with claim 25 and characterized in that a support, for example in the form of a grid (313), which restricts the movement of the mat rearwardly is arranged behind the mat.

27. A ground preparation machine with a rotor-tiller (20) and a rake (24), or flexible mat (31), or impact surface (310) arranged therebehind, in particular in accordance with one of the claims 19 to 26, and characterized in that seed dispensing mouth-pieces (47) of a drilling device (45) are arranged behind the rake (24), or the mat (31), or the impact surface (310) on a mounting beam (100) which is suspended for movement in the horizontal direction.

28. A ground preparation machine in accordance with claim 27 and characterized in that the mounting beam, or beams, (100) is, or are, vertically adjustable.

29. A ground preparation machine in accordance with one of the claims 27 and 28 and characterized in that the horizontally movable mounting beam (100) is constructed as a strip which is substantially flexible in the horizontal direction and which can lie against the rear side of the rake tynes (25), or the mat (31), or the impact surface (310).

30. A ground preparation machine in accordance with one of the claims 27 to 29 and characterized in that the horizontally movable mounting beam (100) is substantially rigid.

31. A ground preparation machine in accordance with one of the claims 27 to 30 and characterized in that the mounting beam (100) is horizontally movable and preferably adjustably mounted spaced apart from the rear side of the rake tynes (25), or the mat (31), or the impact surface (310).

32. A ground preparation machine in accordance with one of the claims 27 to 31 and characterized in that the mounting beam or beams (100) are arranged on pivotable arms (101).

33. A ground preparation machine in accordance with one of the claims 27 to 32 and characterized in that the mounting beam or beams (100) are acted on by a spring device (105) which tries to push the seed dispensing mouth-pieces (47) against the ground resistance in the direction of travel (F).

34. A ground preparation machine in accordance with one of the claims 19 to 33 and characterized in that the greatest working depth of the rake (24), the vertical adjustment of the impact surface (310) and/or the vertical adjustment of the seed dispensing mouth-pieces (47) is coupled to the vertical adjustment of the crushing roller (202).

35. A ground preparation machine in accordance with claim 1 and characterized in that the scrapers (207) as seen in the axial direction of the roller (202) contact the roller surface beneath the horizontal central plane.

36. A ground preparation machine with a crushing roller (202) having a substantially closed peripheral surface and tooth elements (204) arranged in rows in the peripheral direction, with scrapers (207) being arranged between the toothed elements and spaced a distance (a) from the same, and with tyne elements (214) having sprung ends (215') which engage in the ground surface being attachable behind the scrapers in the direction of travel (F), in particular in accordance with one of the claims 1 to 35, characterized in that the tyne elements (214) are removably or interchangeably mounted, with the mounting means which serve to directly or indirectly secure the scrapers (207) to the auxiliary or roller frame (201), preferably bolts (211) and nuts (212), simultaneously serving to secure the tyne elements (214).

37. A ground preparation machine in accordance with one of the claims 1 to 35 and characterized in that the tyne elements (214) are arranged as coil spring elements with end pieces (215', 215'') arranged approximately transverse to the axis of the coil, and projecting beyond the peripheral surface of the coil, of which one is in each case directly or indirectly arranged on the roller frame.

38. A ground preparation machine in accordance with one of the claims 1 to 37 and characterized in that the tyne elements (214) are secured to the scrapers (207), preferably by means of bent around U-shaped ends (215'').

39. A ground preparation machine with a crushing roller having rows of teeht aligned in the peripheral direction on a peripherally closed or substantially closed roller body (203), which scrapers (207) arranged between the rows of teeth contacting the roller body at a preferably acute angle of incidence, in particular in accordance with one of the claims 1 to 38, and characterized in that the teeth elements are arranged as approximately trapezium-like plates (205) each of which is fastened to the roller surface (203) at its long base edge (205').

40. A ground preparation machine in accordance with claim 39 and characterized in that the trapezium-like plates (205) are each welded to the roller surface (203) at their long base edges, with the weld bead (206, 206'), as seen in the axial direction of the roller (202), being arranged on one half of the base edge on the front side and on the other half of the base edge on the reverse side of the plate, and being preferably deposited on the roller surface around the end edges (205'') of the plate (205) which face in the direction of rotation of the roller and against the direction of rotation of the roller respectively.

41. A ground preparation machine in accordance with one of the claims 39 and 40 and characterized in that the tooth elements (204) are peripherally displaced relative to one another as seen in the axial direction of the roller (202).

42. A ground preparation machine in accordance with one of the claims 39 to 41 and characterized in that a space approximately equal to the breadth of the tooth elements (204) is in each case provided between neighbouring tooth elements (204) of one row of teeth.

43. A ground preparation machine in accordance with one of the claims 1 to 42 and characterized in that the scrapers (207) and/or the tyne elements (214) are vertically adjustably arranged relative to the crushing roller (202).

**Revendications**

1. Appareil de travail de sol entraîné par un arbre de prise de force, comportant un châssis (36) réglable en hauteur — notamment au moyen d'une suspension à trois points — pouvant être accouplé à un tracteur portant l'appareil de travail de sol et sur lequel sont disposés des outils de travail de sol (107) fixés de façon amovible, en considérant le sens de marche (F) en avant d'un rotor à dents (20) entraîné par l'arbre de prise de force, un recouvrement (24, 31, 310) placé en arrière du rotor à dents (20) et dirigeant la paire projetée vers la surface du sol ainsi qu'un cylindre de désagrégation (202), réglable en hauteur, placé en arrière du recouvrement (24, 31, 310) et comportant une surface périphérique sensiblement fermée et des éléments dentés (204) disposés en rangée dans une direction périphérique, caractérisé en ce que:

— il est prévu comme outils fixes de travail du sol des outils de nivellement (107) réglables en hauteur, placés des deux côtés des sillons (S) laissés par le véhicule tracteur (38), qui ont tendance, au moyen de plaques de nivellement (113) orientées sensiblement parallèlement à l'axe vertical de l'appareil placées en oblique par rapport au sens de marche (F) et engagées par leur partie extrême arrière dans les sillons (S), à pousser la terre dans les sillons,

— le rotor à dents (20) qui est disposé sur le châssis (36) avec un mécanisme de transmission (43) solidaire du châssis, peut être entraîné dans un sens de rotation (U) correspondant au sens de marche (F),

— le recouvrement (24, 31, 310) est disposé de façon à se déplacer en arrière du rotor à dents (20) et comporte des parties déplaçables relativement,

— le cylindre de désagrégation (202) est monté sur des articulations (40) du châssis (36) au moyen d'un châssis auxiliaire (201), et

— il est prévu entre les éléments dentés (204) du cylindre de désagrégation (202), à distance (a) de ceux-ci, des racleurs (207) en arrière desquels des éléments de ratissage (214) à extrémités élastiques (215) pénètrent dans la surface du sol.

2. Appareil de travail de sol comportant des outils de nivellement (107), qui ont tendance à pousser la terre dans des sillons (S) laissés par le tracteur (38), notamment selon la revendication 1, caractérisé en ce que les plaques de nivellement (113) orientées sensiblement parallèlement à un axe vertical, disposées en oblique par rapport au sens de marche (F) et s'engageant par leur partie extrême arrière dans les sillons (S) sont montées au moyen de manches (112) placés à peu près au milieu des plaques et qui forment en coopération avec la plaque de nivellement correspondante (113) un ensemble à peu près en forme de T, sur le châssis (36) ou sur une partie du châssis.

3. Appareil de travail de sol selon la revendication 2, caractérisé en ce qu'il est prévu comme manches des pièces (112) en forme de plaques.

4. Appareil de travail de sol selon la revendication 2 ou 3, caractérisé en ce qu'il est prévu sur les extrémités des manches (112) opposées aux plaques de nivellement (113) des colliers (114) pour assurer la fixation sur une poutre transversale (110), la poutre transversale et les colliers ayant de préférence un profil polygonal.

5. Appareil de travail de sol selon l'une quelconque des revendications 1 à 4, caractérisé en ce que les plaques de nivellement (113) sont disposées en étant inclinées d'un petit angle par rapport à l'horizontale.

6. Appareil de travail de sol selon l'une quelconque des revendications 1 à 5, caractérisé en ce que, comme outils de nivellement central (207'), il est prévu deux outils de nivellement comportant des plaques de nivellement (113') reliés entre elles en forme de coin (Fig. 2).

7. Appareil de travail de sol selon la revendication 6, caractérisé en ce qu'il est prévu au sommet du coin une plaque verticale de coupe (113'') dirigée vers l'avant dans le sens de marche.

8. Appareil de travail de sol selon l'une quelconque des revendications 1 à 7, caractérisé en ce que les plaques de nivellement (113), considérées dans le sens de marche (7), comportent des zones de travail se recouvrant mutuellement.

9. Appareil de travail de sol selon l'une quelconque des revendications 1 à 8, caractérisé en ce que les outils de nivellement (107) sont disposés sur une poutre transversale (110) qui est montée sur le châssis (36) en étant réglable en hauteur.

10. Appareil de travail de sol comportant un rotor à dents (20), notamment selon l'une quelconque des revendications 1 à 9, caractérisé en ce que les dents (1 à 6) comportent chacune un bord de percussion (15) à section en forme de coin et dirigé dans le sens de rotation (U).

11. Appareil de travail de sol selon la revendication 10, caractérisé en ce que les dents (1 à 6) ont une section en forme de losange ou — avantageusement — carrée, restant sensiblement constante sur leur longueur.

12. Appareil de travail de sol selon l'une quelconque des revendications 10 et 11, caractérisé en ce que les dents (1 à 6) comportent des surfaces frontales extérieures (16) orientées à peu près parallèlement à l'arbre de rotor (10) et inclinées d'un angle aigu par rapport au bord de percussion (15).

13. Appareil de travail de sol selon l'une quelconque des revendications 10 à 12, caractérisé en ce que les dents (1 à 6) sont disposées à une distance radiale de l'arbre de rotor (10) de manière que l'axe de l'arbre de rotor (10) soit placé, en considérant le sens de rotation (U) des dents (1 à 6) en avant du bord de percussion (15).

14. Appareil de travail de sol selon l'une quelconque des revendications 10 à 13, caractérisé en ce que les dents (1 à 6) sont disposées avec décalage mutuel dans la direction axiale et dans la direction de rotation (U) de l'arbre de rotor (10) sous la forme d'une ou plusieurs hélices.

15. Appareil de travail de sol selon l'une quelconque des revendications 10 à 14, caractérisé en ce qu'à chaque fois deux dents (1, 4; 2, 5; 3, 6) sont placées dans des positions diamétralement opposées approximativement dans un plan radial par rapport à l'arbre de rotor (10), la paire de dents respectivement adjacente dans la direction axiale de l'arbre de rotor étant décalée dans la direction périphérique d'un angle qui est de préférence de 60°.

16. Appareil de travail de sol selon l'une quelconque des revendications 10 à 14, caractérisé en ce que le rotor à dents (20) comporte plusieurs groupes de dents se composant chacun de six dents (1 à 6, 1' à 6'), qui sont disposées avec un léger décalage mutuel dans la direction périphérique (U) et dont les dents (1 à 6, 1' à 6') sont placées respectivement dans un plan radial séparé du rotor à dents (20), les trois premières (1 à 3, 1' à 3') et les trois dernières (4 à 6') dents d'un groupe de dents étant respectivement placées sur une ligne hélicoïdale avec un angle d'environ 120° entre les dents successives, tandis que la troisième (3, 3') et la quatrième (4, 4') dent d'un groupe de dents sont placées dans des positions diamétralement opposées, en considérant la direction axiale du rotor à dents.

17. Appareil de travail de sol selon l'une quelconque des revendications 10 à 16, caractérisé en ce qu'il est prévu sur l'arbre de rotor (10) des fourreaux (11), disposés notamment à peu près tangentiellement à l'arbre de rotor (10) et dans lesquels les dents (1 à 6) sont emmanchées de manière à pouvoir être remplacées et arrêtées.

18. Appareil de travail de sol selon l'une quelconque des revendications 10 à 17, caractérisé en ce que les dents (1 à 6) sont fixées dans les fourreaux (11) par des goupilles de sécurité (14) disposées transversalement à l'arbre de rotor (10) et qui peuvent être engagées dans des trous radiaux ménagés dans les fourreaux et dans des trous correspondants ménagés dans les dents.

19. Appareil de travail de sol comportant un rotor à dents (20) et un recouvrement (24, 31) placé en arrière de celui-ci, notamment selon l'une quelconque des revendications 1 à 18, caractérisé en ce que, pour parfaire la désagrégation de morceaux de terre (34) tels que ceux laissés en arrière du rotor à dents (20), il est prévu un râteau (24) comportant des dents (25) en forme de lames, qui sont suspendues de façon pivotante, en s'adaptant à la résistance du sol, et qui sont sollicitées sur leur côté arrière au moyen d'une nappe (31) recouvrant au moins partiellement le côté arrière des dents du râteau.

20. Appareil de travail de sol selon la revendication 19, caractérisé en ce que le râteau (24) est disposé sur le carter (21) du rotor à dents (20) sous la forme d'une paroi arrière du carter d'une surface déflectrice pour les morceaux de terre (34) projetés par le rotor à dents (20).

21. Appareil de travail de sol selon l'une des revendications 19 et 20, caractérisé en ce que les dents (25) du râteau comportent des bords avant en forme de dents de scie.

22. Appareil de travail de sol selon l'une quelconque des revendications 19 à 21, caractérisé en ce que les dents (25) du râteau sont disposées, en les considérant en vue en plan, avec décalage mutuel en forme de zig-zag.

23. Appareil de travail de sol selon l'une quelconque des revendications 19 à 22, caractérisé en ce que la zone de pivotement des dents (25) du râteau dans le sens de marche (F) de l'appareil de travail de sol est limitée par une butée réglable (barre tournante 27).

24. Appareil de travail de sol comportant un rotor à dents (20) et un recouvrement disposé en arrière de celui-ci, notamment selon l'une quelconque des revendications 1 à 18, caractérisé en ce que le recouvrement est agencé sous forme d'une surface déflectrice flexible (310), qui dévie vers la surface du sol les morceaux de terre projetés par le rotor à dents (20).

25. Appareil de travail de sol selon la revendication 24, caractérisé en ce que, comme surface déflectrice, il est prévu entre deux lattes transversales (312) une nappe flexible (310) surdimensionnée et formant une partie bombée.

26. Appareil de travail de sol selon la revendication 25, caractérisé en ce qu'il est prévu en arrière de la nappe un appui, par exemple sous forme d'une grille (313), qui limite la possibilité de mouvement de la nappe vers l'arrière.

27. Appareil de travail de sol comportant un rotor à dents (20) et un râteau (24), ou une nappe flexible (31), ou une surface déflectrice (310) placés en arrière, notamment selon l'une quelconque des revendications 19 à 26, caractérisé en ce qu'il est prévu en arrière du râteau (24), de la nappe (31) ou de la surface déflectrice (310) des buses de sortie de semence (47) d'un semoir (45) sur un support (100) suspendu en étant mobile dans une direction horizontale.

28. Appareil de travail de sol selon la revendication 27, caractérisé en ce que le ou les supports (100) sont réglables en hauteur.

29. Appareil de travail de sol selon l'une des revendications 27 et 28, caractérisé en ce que le support (100) mobile horizontalement est agencé sous forme d'une barre flexible sensiblement dans une direction horizontale, qui peut s'appliquer contre le côté arrière des dents (25) du râteau, ou de la nappe (31) ou de la surface déflectrice (310).

30. Appareil de travail de sol selon l'une quelconque des revendications 27 à 29, caractérisé en ce que le support (100) mobile horizontalement est sensiblement rigide.

31. Appareil de travail de sol selon l'une quelconque des revendications 27 à 30, caractérisé en ce que le support (100) est monté en étant mobile horizontalement et de préférence réglable à distance du côté arrière des dents (25) du râteau, ou de la nappe (31), ou de la surface déflectrice (310).

32. Appareil de travail de sol selon l'une quelconque des revendications 27 à 31, caractérisé en ce que les supports (100) sont disposés sur des bras pivotants (101).

33. Appareil de travail de sol selon l'une quelconque des revendications 27 à 32, caractérisé en ce que le ou les supports (100) sont sollicités par un dispositif élastique (105) qui a tendance à pousser les buses de sortie de semence (47) dans le sens de marche (F) en opposition à la résistance du sol.

34. Appareil de travail de sol selon l'une quelconque des revendications 19 à 33, caractérisé en ce que la plus grande profondeur de travail du râteau (24), le réglage en hauteur de la surface déflectrice (310) et/ou le réglage en hauteur des buses de sortie de semence (47) sont en relation avec le réglage de hauteur du cylindre de désagrégation (202).

35. Appareil de travail de sol selon la revendication 1, caractérisé en ce que les racleurs (207) s'appliquent, en considérant la direction axiale du cylindre (202), contre la surface du sol en dessous du plan médian horizontal.

36. Appareil de travail de sol comportant un cylindre de désagrégation (202) pourvu d'une surface périphérique sensiblement fermée et d'éléments dentés (204) disposés en rangée dans la direction périphérique et entre lesquels sont disposés, à une distance (a) de ceux-ci, des racleurs (207) en arrière desquels, en considérant le sens de marche (F), peuvent être mmontés des éléments de ratissage (214) comportant des extrémités élastiques (215') s'engageant dans la surface su sol, notamment selon l'une quelconque des revendications 1 à 35, caractérisé en ce que les éléments de ratissage (214) sont fixés de façon amovible ou échangeable, auquel cas les moyens de fixation, de préférence des boulons (211) et des écrous (212) servant à la fixation directe ou indirecte des racleurs (207) sur un châssis auxiliaire ou de cylindre (201), servent simultanément à la fixation des éléments de râtissage (214).

37. Appareil de travail de sol selon l'une quelconque des revendications 1 à 35, caractérisé en ce que les éléments de ratissage (214) sont disposés sous forme d'éléments de ressorts hélicoïdaux comportant des parties extrêmes (215', 215'') orientées perpendiculairement à l'axe de l'hélice, dépassant extérieurement de la surface périphérique de l'hélice et dont l'une est respectivement montée, directement ou indirectement, sur le châssis de cylindre.

38. Appareil de travail de sol selon l'une quelconque des revendications 1 à 37, caractérisé en ce que les éléments de ratissage (214) sont fixés sur les racleurs (207), de préférence au moyen d'extrémités recourbées en forme de U (215'').

39. Appareil de travail de sol comportant un cylindre de désagrégation pourvu de rangées de dents, disposées sur un corps de cylindre (203) fermé ou sensiblement fermé du côté de la périphérie, orientées dans la direction périphérique, ainsi que des racleurs (207) disposés entre les rangées de dents et s'appuyant sur le corps de cylindre avec un angle d'application de préférence aigu, notamment selon l'une quelconque des revendications 1 à 38, caractérisé en ce qu'il est prévu comme éléments dentés des plaques de forme à peu près trapézoïdales (205), qui sont fixées sur la surface de cylindre (203) par leur côté long de base (205').

40. Appareil de travail de sol selon la revendication 39, caractérisé en ce que les plaques de forme trapézoïdale (205) sont soudées par leur bord long de base sur la surface de cylindre (203), auquel cas, en considérant la direction axiale du cylindre (202), le cordon de soudure (206, 206') est disposé sur une des moitiés du bord de base sur le côté avant et sur l'autre moitié du bord de base sur la côté arrière des plaques et est de préférence formé sur la surface de cylindre de manière à entourer légèrement les bords frontaux (205'') de la plaque (205) qui sont orientés dans le sens de rotation du cylindre (202) ou dans le sens contraire.

41. Appareil de travail de sol selon l'une des revendications 39 et 40, caractérisé en ce que les éléments dentés (204) sont disposés, en considérant la direction axiale du cylindre (202), en étant mutuellement décalés dans la direction périphérique.

42. Appareil de travail de sol selon l'une quelconque des revendications 39 à 41, caractérisé en ce qu'il est prévu entre des éléments dentés adjacents (204) d'une rangée de dents respectivement un espacement correspondant à peu près à la largeur des éléments dentés (204).

43. Appareil de travail de sol selon l'une quelconque des revendications 1 à 42, caractérisé en ce que les racleurs (207) et/ou les éléments de ratissage (214) sont disposés de façon à pouvoir être réglés en hauteur par rapport au cylindre de désagrégation (202).

FIG.1

0 033 950

0 033 950

FIG.2

IV ▶

FIG.3

FIG.4

0 033 950

FIG.5

FIG.6

FIG.7

FIG.8

FIG.9

FIG. 10

S

FIG.11

FIG.12

0 033 950

# FIG.13

316

317

315

23

312

314

310

312

XIV

**311**

313

312

314

*311*

312¹

312

314

**21**

20

37

# FIG.14

312

314

*311*

314    312    313

0 033 950

FIG.15

FIG. 16

FIG. 17

0 033 950

FIG.18

FIG.19